# EUROPEAN PATENT APPLICATION

(11) **EP 3 118 035 A1**
(43) Date of publication of application: **18.01.2017**
(21) Application number: 14885782.4
(22) Date of filing: 04.11.2014
(51) Int. Cl.: B60H 1/22, B60H 1/03, F25B 1/00, F25B 5/02

(54) **IN-VEHICLE TEMPERATURE ADJUSTING DEVICE, VEHICLE AIR-CONDITIONING DEVICE, AND BATTERY TEMPERATURE ADJSUTING DEVICE**

(30) Priority: 12.03.2014 JP 2014049129; 25.09.2014 JP 2014195462
(71) Applicant: Calsonic Kansei Corporation, Saitama-shi, Saitama 331-8501 (JP)
(72) Inventor: HATAKEYAMA, Jun, Saitama-shi Saitama 331-8501 (JP); INABA, Yoshiyuki, Saitama-shi Saitama 331-8501 (JP)
(74) Representative: Grünecker Patent- und Rechtsanwälte PartG mbB
(86) International application number: PCT/JP2014/079260
(87) International publication number: WO 2015/136768

(57) **Abstract**

A vehicle-mounted temperature adjustment device included in a vehicle air-conditioning device includes a low-water-temperature circuit through which low-water-temperature cooling water circulates. In addition, the vehicle-mounted temperature adjustment device has a compressor, a condenser, a subcooling condenser, an expansion valve, which is one example of a first expansion unit, an expansion valve, which is one example of a second expansion unit, and an evaporator and refrigerant-water heat exchanger, and includes a refrigeration circuit that performs temperature adjustment of a temperature-adjustment target. The low-water-temperature circuit has a sub-radiator that releases heat of the low-water-temperature cooling water that has been subjected to heat exchange with refrigerant at the subcooling condenser.

## Description

### TECHNICAL FIELD

The present invention relates to a vehicle-mounted temperature adjustment device, a vehicle air-conditioning device, and a battery-temperature adjustment device.

### BACKGROUND ART

JP2011-230648A discloses a vehicle thermal management system in which a battery is used as a heat mass for storing heat and the heat stored in the battery is used for vehicle cabin air conditioning.

### SUMMARY OF INVENTION

In JP2011-230648A, it is disclosed to perform the vehicle cabin air conditioning by using the coldness and heat stored in the battery. However, JP2011-230648A does not refer to an achievement of an efficiency improvement in a vehicle-mounted refrigeration circuit itself.

The present invention has been conceived in light of the above-described circumstances, and an object thereof is to provide a vehicle-mounted temperature adjustment device, a vehicle air-conditioning device, and a battery-temperature adjustment device that are capable of improving an efficiency of a refrigeration circuit.

One embodiment of a vehicle-mounted temperature adjustment device comprising a heat transfer medium circuit being configured to allow circulation of heat transfer medium. The vehicle-mounted temperature adjustment device comprising a refrigeration circuit having: a compression unit being configured to compress refrigerant; a condensation unit being configured to condense the refrigerant having been compressed by the compression unit; a supercooling unit being configured to cool the refrigerant by performing heat exchange between the refrigerant having been condensed by the condensation unit and the heat transfer medium; an expansion unit being configured to expand the refrigerant having been cooled by the supercooling unit; and an evaporation unit that is configured to evaporate the refrigerant having been expanded by the expansion unit; and being configured to perform temperature adjustment of a temperature-adjustment target. The vehicle-mounted temperature adjustment device comprising the heat transfer medium circuit has a radiation unit being configured to release heat of the heat transfer medium having been subjected to the heat exchange with the refrigerant at the supercooling unit.

### ADVANTAGEOUS EFFECTS OF INVENTION

A vehicle-mounted temperature adjustment device of the above-mentioned aspect allows an improvement in an efficiency of a refrigeration circuit.

### BRIEF DESCRIPTION OF DRAWINGS

[FIG. 1] FIG. 1 is a configuration diagram showing, in outline, a vehicle air-conditioning device.
[FIG. 2] FIG. 2 is a diagram showing a battery warming circuit.
[FIG. 3A] FIG. 3A is a diagram showing one example of an operating state of the vehicle air-conditioning device at the time of a cooling operation.
[FIG. 3B] FIG. 3B is a diagram showing one example of the operating state of the vehicle air-conditioning device at the time of a heating operation.
[FIG. 3C] FIG. 3C is a diagram showing one example of the operating state of the vehicle air-conditioning device at the time of a charging operation of a battery.
[FIG. 4] FIG. 4 is a diagram showing a flowchart of one example of a control performed by a controller.
[FIG. 5] FIG. 5 is a diagram showing a comparative example of the vehicle air-conditioning device.
[FIG. 6] FIG. 6 is a diagram showing a first modification of the vehicle air-conditioning device.
[FIG. 7A] FIG. 7A is a diagram showing a second modification of the vehicle air-conditioning device.
[FIG. 7B] FIG. 7B is a diagram showing one example of the operating state at the time of the cooling operation in the second modification.
[FIG. 7C] FIG. 7C is a diagram showing one example of the operating state at the time of the heating operation in the second modification.
[FIG. 8] FIG. 8 is a diagram showing another example of the operating state of the vehicle air-conditioning device at the time of the heating operation.
[FIG. 9] FIG. 9 is a diagram showing a third modification of the vehicle air-conditioning device.
[FIG. 10] FIG. 10 is a diagram showing a flowchart of one example of another control.
[FIG. 11A] FIG. 11A is a diagram showing one example of the operating state of the vehicle air-conditioning device 1 in a heating operation A mode.
[FIG. 11B] FIG. 11B is a diagram showing one example of the operating state of the vehicle air-conditioning device 1 in a heating operation B mode.
[FIG. 11C] FIG. 11C is a diagram showing one example of the operating state of the vehicle air-conditioning device 1 in a heating operation C mode.
[FIG. 11D] FIG. 11D is a diagram showing one example of the operating state of the vehicle air-conditioning device 1 in a cooling operation mode.
[FIG. 11E] FIG. 11E is a diagram showing one example of the operating state of the vehicle air-conditioning device 1 in a heat-storing charging mode.

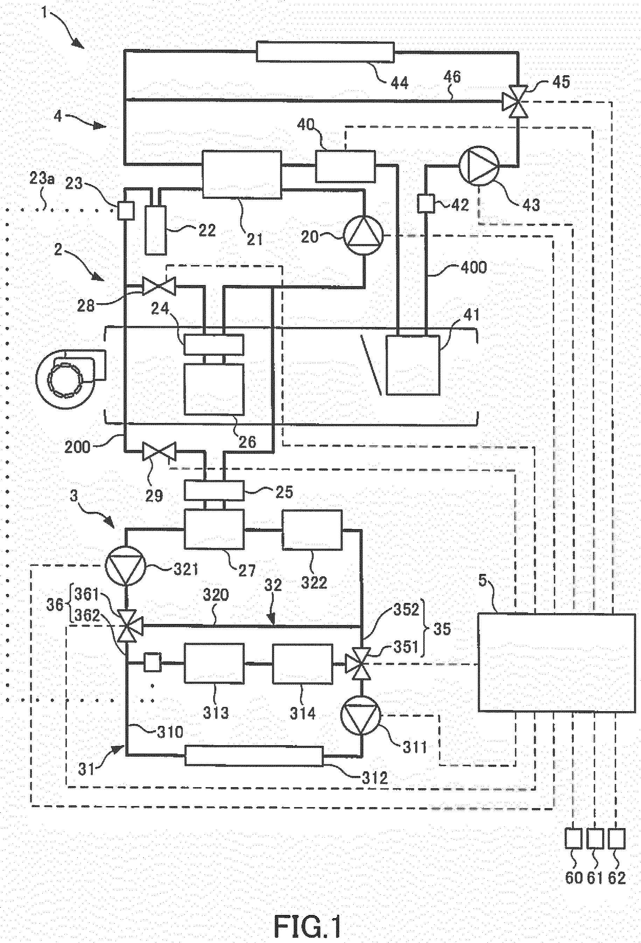

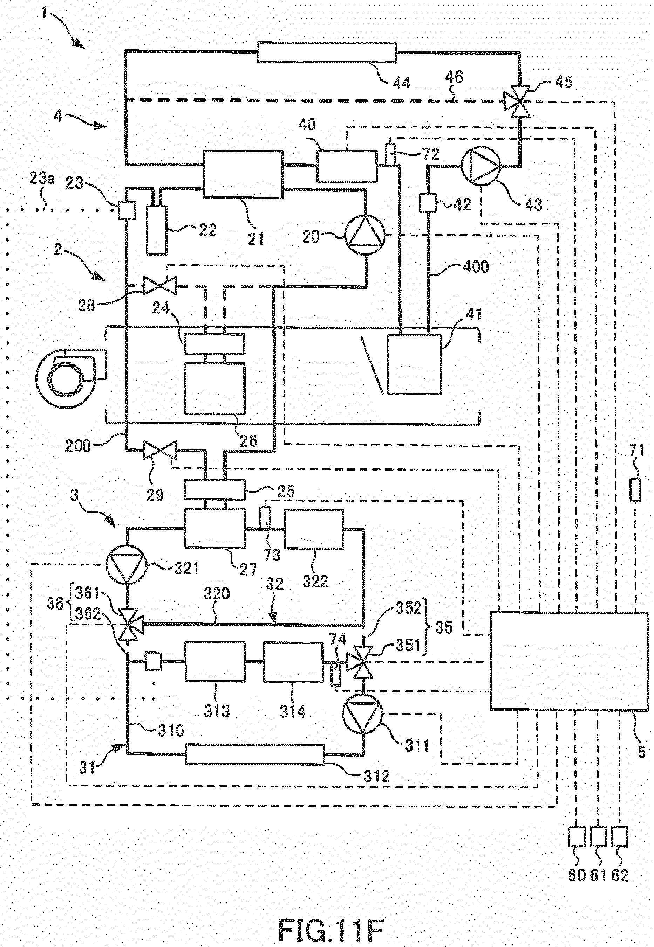

[FIG. 1 IF] FIG. 11F is a diagram showing one example of the operating state of the vehicle air-conditioning device 1 in a coldness-storing charging mode.

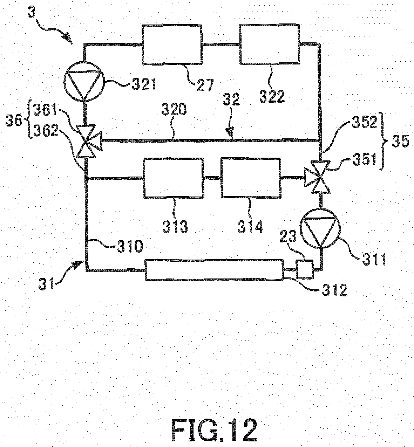

[FIG. 12] FIG. 12 is a diagram showing a first comparative example of a low-water-temperature circuit.

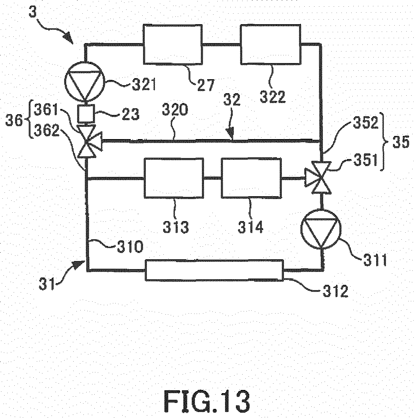

[FIG. 13] FIG. 13 is a diagram showing a second comparative example of the low-water-temperature circuit.

### DESCRIPTION OF EMBODIMENTS

Embodiments of the present invention will be described below with reference to the attached drawings.

FIG. 1 is a configuration diagram showing, in outline, a vehicle air-conditioning device 1. The vehicle air-conditioning device 1 is mounted on a vehicle. A specific example of the vehicle is an electric vehicle.

The vehicle air-conditioning device 1 includes a refrigeration circuit 2, a low-water-temperature circuit 3, a high-water-temperature circuit 4, and a controller 5. Refrigerant is circulated through the refrigeration circuit 2. Cooling water, which is one example of heat transfer medium, is circulated through the low-water-temperature circuit 3 and the high-water-temperature circuit 4. A particular example of the cooling water is antifreezing fluid.

The refrigeration circuit 2 has a compressor 20, a condenser 21, a liquid tank 22, a subcooling condenser 23, an expansion valve 24, an expansion valve 25, an evaporator 26, a refrigerant-water heat exchanger 27, a solenoid valve 28, a solenoid valve 29, and a refrigerant flow path 200. In the following, the subcooling condenser will be referred to as an SC condenser.

The compressor 20, the condenser 21, the liquid tank 22, the SC condenser 23, the solenoid valve 28, the expansion valve 24, and the evaporator 26 are provided in this order along the flow direction of the refrigerant. These components are connected by the refrigerant flow path 200 such that the refrigerant can be circulated therethrough. A solenoid valve 29, the expansion valve 25, and the refrigerant-water heat exchanger 27 are provided in this order along the flow direction of the refrigerant. They are connected with the refrigerant flow path 200 so as to be in parallel to the solenoid valve 28, the expansion valve 24, and the evaporator 26. The refrigerant flow path 200 is one example of a refrigerant flow path forming a flow path of the refrigeration circuit 2.

The compressor 20 is one example of a compression unit that compresses the refrigerant. Specifically, the compressor 20 is an electrical compressor. The condenser 21 is one example of a condensation unit that condenses the refrigerant that has been compressed by the compressor 20. Specifically, the condenser 21 is a fluid-cooled condenser that performs heat exchange between the refrigerant and the cooling water. Specifically, the cooling water is the cooling water that circulates through the high-water-temperature circuit 4. The liquid tank 22 is one example of a refrigerant storage portion that stores the refrigerant that has been condensed by the condenser 21. In the following, the cooling water that circulates through the high-water-temperature circuit 4 is also referred to as high-water-temperature cooling water.

The SC condenser 23 is one example of a supercooling unit that cools the refrigerant that has been condensed by the condenser 21. Specifically, the SC condenser 23 is a fluid-cooled supercooling unit that performs the heat exchange between the refrigerant and the cooling water. Specifically, the cooling water is the cooling water that circulates through the low-water-temperature circuit 3. Therefore, the SC condenser 23 releases the heat from the refrigeration circuit 2 to the low-water-temperature circuit 3 via the heat exchange. A part 23a indicated by a dotted line shows that the SC condenser 23 is provided in the refrigeration circuit 2 and the low-water-temperature circuit 3. The refrigerant that has been cooled by the SC condenser 23 is supplied to the evaporator 26 through the expansion valve 24 and is supplied to the refrigerant-water heat exchanger 27 through the expansion valve 25. In the following, the cooling water that circulates through the low-water-temperature circuit 3 is also referred to as low-water-temperature cooling water.

The expansion valve 24 and the expansion valve 25 are examples of an expansion unit that expands the refrigerant that has been cooled by the SC condenser 23. The expansion valve 24 is one example of a first expansion unit that is the expansion unit that expands the refrigerant that has been cooled by the SC condenser 23 and supplies the refrigerant into the evaporator 26. The expansion valve 25 is one example of a second expansion unit that is the expansion unit that expands the refrigerant that has been cooled by the SC condenser 23 and supplies the refrigerant into the refrigerant-water heat exchanger 27. The expansion valve 24 and the expansion valve 25 expand the refrigerant that has been cooled by the SC condenser 23 by reducing the pressure thereof.

The evaporator 26 and the refrigerant-water heat exchanger 27 are examples of an evaporation unit that evaporates the refrigerant that has been expanded by the expansion valve 24 and the expansion valve 25. The evaporator 26 is one example of a first evaporation unit that is an evaporation unit that performs the heat exchange between the refrigerant that has been expanded by the expansion valve 24 and the air, thereby evaporating the refrigerant. Such an evaporator 26 is one example of an air-conditioning evaporation unit that absorbs the heat from the air. The refrigerant-water heat exchanger 27 is one example of a second evaporation unit that is the evaporation unit that performs the heat exchange between the refrigerant that has been expanded by the expansion valve 25 and the low-water-temperature cooling water, thereby evaporating the refrigerant. Such a refrigerant-water heat exchanger 27 is one example of a heat-absorbing evaporation unit that absorbs the heat from the low-water-temperature cooling water.

The evaporator 26 cools the outside air of the evaporator 26 upon the evaporation of the refrigerant. The air that has been cooled by the evaporator 26 is used for the vehicle-cabin air-conditioning at the time of a cooling operation. The time of the cooling operation may also include the time of dehumidificating operation. The refrigerant-water heat exchanger 27 cools the low-water-temperature cooling water upon the evaporation of the refrigerant. The refrigerant that has been evaporated by the evaporator 26 and the refrigerant-water heat exchanger 27 is repressurized by the compressor 20.

The solenoid valve 28 and the solenoid valve 29 are examples of a valve unit that changes the flowing state of the refrigerant. The solenoid valve 28 is one example of a first valve unit that is the valve unit that changes the flowing state of the refrigerant from the SC condenser 23 to the evaporator 26. The solenoid valve 29 is one example of a second valve unit that is the valve unit that changes the flowing state of the refrigerant from the SC condenser 23 to the refrigerant-water heat exchanger 27. The solenoid valve 28 is provided in the refrigeration circuit 2 between the SC condenser 23 and the expansion valve 24. The solenoid valve 29 is provided in the refrigeration circuit 2 between the SC condenser 23 and the expansion valve 25. Specifically, the solenoid valve 28 and the solenoid valve 29 are open/close valves. The solenoid valve 28 and the solenoid valve 29 may be opening adjustable valves that are capable of adjusting the opening.

The low-water-temperature circuit 3 has a driving-device circuit 31, a battery circuit 32, a connection portion 35, and a connection portion 36.

The driving-device circuit 31 has a water pump 311, a sub-radiator 312, the SC condenser 23, a motor 313, an inverter 314, and a cooling water flow path 310. The water pump 311, the sub-radiator 312, the SC condenser 23, the motor 313, and the inverter 314 are provided in this order along the flow direction of the cooling water. These components are connected by the cooling water flow path 310 such that the cooling water can be circulated. The cooling water flow path 310 is one example of a first-heat-transfer-medium flow path that forms the flow path of the driving-device circuit 31. The driving-device circuit 31 is one example of a driving-device circuit in which the cooling water circulates through at least one of the SC condenser 23; either one of the motor 313 and the inverter 314; and the sub-radiator 312.

The water pump 311 is one example of a pump unit that pumps the cooling water, and is one example of a first pump unit that is the pump unit that circulates the cooling water through the driving-device circuit 31. Specifically, the water pump 311 is an electrical water pump that is driven by electrical power and is a water pump that is capable of adjusting the flow rate of the cooling water.

The sub-radiator 312 is one example of a radiation unit that releases the heat of the cooling water, and is one example of a first radiation unit that is the radiation unit that releases the heat of the low-water-temperature cooling water. Specifically, the sub-radiator 312 is an air-cooled radiator that performs the heat exchange between the cooling water and the air, thereby releasing the heat of the cooling water. The sub-radiator 312 cools, with the air flowing the outside, the cooling water that has received the heat from at least one of a battery 322, the motor 313, and the inverter 314, which are examples of electric devices from which the cooling water receives the heat.

The motor 313 is a motor for driving the vehicle. Electrical power is supplied to the motor 313 from the battery 322 via the inverter 314. The inverter 314 is a power converter that converts the supplied direct current power into alternating current power. The inverter 314 outputs the converted alternating current power to the motor 313.

The battery circuit 32 has a water pump 321, the battery 322, the refrigerant-water heat exchanger 27, and a cooling water flow path 320. The water pump 321, the battery 322, and the refrigerant-water heat exchanger 27 are provided in this order along the flow direction of the cooling water. These components are connected by the cooling water flow path 320 such that the cooling water can be circulated. The cooling water flow path 320 is one example of a second heat transfer medium flow path that forms the flow path of the battery circuit 32. The battery circuit 32 is one example of a battery circuit in which the cooling water circulates through at least between the battery 322 and the refrigerant-water heat exchanger 27.

The water pump 321 is one example of the pump unit, and is one example of a second pump unit that is the pump unit that circulates the cooling water through the battery circuit 32. Specifically, the water pump 321 is an electrical water pump driven by electrical power, and is the water pump that is capable of adjusting the flow rate of the cooling water. The battery 322 is a secondary battery, and forms an electrical power source, such as the water pump 311, the water pump 321, and the motor 313. In the battery 322, heat is generated upon charging and discharging.

The connection portion 35 is one example of a first connection portion including a three-way valve 351 and a connecting flow path 352. The three-way valve 351 is one example of a first three-way valve that splits the driving-device circuit 31. In the driving-device circuit 31, the three-way valve 351 is provided between the motor 313 and the inverter 314, and the water pump 311. The three-way valve 351 forms a part of the driving-device circuit 31. The connecting flow path 352 is one example of the first connecting flow path that connects the battery circuit 32 to the driving-device circuit 31 via the three-way valve 351. The connecting flow path 352 is connected to the flow path between the water pump 321 and the battery 322 of the battery circuit 32.

The connection portion 36 is one example of a second connection portion including a three-way valve 361 and a connecting flow path 362. The three-way valve 361 is one example of a second three-way valve that splits the battery circuit 32. In the battery circuit 32, the three-way valve 361 is provided between the water pump 321 and the battery 322. Specifically, in the battery circuit 32, the three-way valve 361 is provided upstream of a connecting point to the connecting flow path 352. The three-way valve 361 forms a part of the battery circuit 32. The connecting flow path 362 is one example of the second connecting flow path that connects the driving-device circuit 31 to the battery circuit 32 via the three-way valve 361. The connecting flow path 362 is connected to the flow path between the sub-radiator 312 and the SC condenser 23 of the driving-device circuit 31.

The low-water-temperature circuit 3 has: the sub-radiator 312 that is one example of the radiation unit; the motor 313 that is one example of the electric device; and the inverter 314 and the battery 322, and is one example of a heat transfer medium circuit through which the cooling water circulates. In the low-water-temperature circuit 3, the temperature of the low-water-temperature cooling water is set so as to be kept lower than the temperature of the high-water-temperature cooling water.

The high-water-temperature circuit 4 has the condenser 21, a main heater 40, a heater core 41, a tank 42, a water pump 43, a radiator 44, a three-way valve 45, and a cooling water flow path 400. The condenser 21, the main heater 40, the heater core 41, the tank 42, the water pump 43, the three-way valve 45, and the radiator 44 are provided in this order along the flow direction of the cooling water. These components are connected by the cooling water flow path 400 such that the cooling water can be circulated. The cooling water flow path 400 includes a bypass flow path 46. The cooling water flow path 400 is one example of a third heat transfer medium flow path that forms the flow path of the high-water-temperature circuit 4.

The main heater 40 is one example of a heat transfer medium warming unit, which warms the cooling water, and generates heat by electrical power supplied from the battery 322. The heater core 41 is one example of an air warming unit that warms the air, and the heater core 41 warms the air by performing the heat exchange between the cooling water and the air. Specifically, the heater core 41 performs the heat exchange between the cooling water that has been warmed by the condenser 21 and the main heater 40 and the air around the heater core 41. The air that has been warmed by the heater core 41 is used for vehicle-cabin air-conditioning at the time of a heating operation.

The tank 42 is one example of a heat transfer medium storage portion that stores the cooling water. The water pump 43 is one example of the pump unit, and is one example of a third pump unit that circulates the cooling water through the high-water-temperature circuit 4. Specifically, the water pump 43 is an electrical water pump, which is driven by electrical power, and is the water pump that is capable of adjusting the flow rate of the cooling water. The radiator 44 is one example of the radiation unit, and is one example of a second radiation unit that releases the heat of the high-water-temperature cooling water. Specifically, the radiator 44 is the air-cooled radiator that performs the heat exchange between the air and the cooling water, thereby releasing the heat of the cooling water.

The three-way valve 45 is provided on the flow path that is connected to the radiator 44 at the upstream side thereof in the high-water-temperature circuit 4. The bypass flow path 46 connects, in the high-water-temperature circuit 4, the flow path, which is connected to the radiator 44 at the downstream side thereof, to the flow path, which is connected to the radiator 44 at the upstream side thereof, via the three-way valve 45, thereby bypassing the radiator 44. The three-way valve 45 and the bypass flow path 46 are examples of a radiator bypass portion that forms a circuit diverted from the radiator 44.

The high-water-temperature circuit 4 has: the main heater 40; the heater core 41; the radiator 44; and the three-way valve 45 and the bypass flow path 46, and the high-water-temperature circuit 4 is one example of the heat transfer medium circuit through which the cooling water circulates.

The controller 5 is an electronic control device and is one example of a control unit that controls the three-way valve 351 and the three-way valve 361. The controller 5 also controls the water pump 311 and the water pump 321, the compressor 20, the solenoid valve 28, the solenoid valve 29, the main heater 40, the water pump 43, and the three-way valve 45. These components are electrically connected to the controller 5 as the controlled targets. An A/C switch 60, a temperature adjusting switch 61, and a connection detection sensor 62 are electrically connected to the controller 5. The A/C switch 60 is one example of an operating unit for operating the compressor 20. The temperature adjusting switch 61 is one example of the operating unit that adjusts the temperature inside the vehicle cabin. The connection detection sensor 62 is one example of a detecting unit that detects the connection between the battery 322 and an external power source.

The controller 5 controls the three-way valve 351 and the three-way valve 361 in accordance with an operation state of the air-conditioning and a charge-performing state of the battery 322. The operation state of the air-conditioning includes the time of the cooling operation, the time of the heating operation, and the time at which the air-conditioning is stopped. The charge-performing state of the battery 322 includes the time of a charging operation and the time of non-charging operation. The controller 5 may control the above-mentioned control target including the three-way valve 351 and the three-way valve 361 on the basis of other parameters, such as the temperature of the battery 322, the temperature of the low-water-temperature cooling water, the temperature of the high-water-temperature cooling water, and so forth. Examples of the control performed by the controller 5 will be described later.

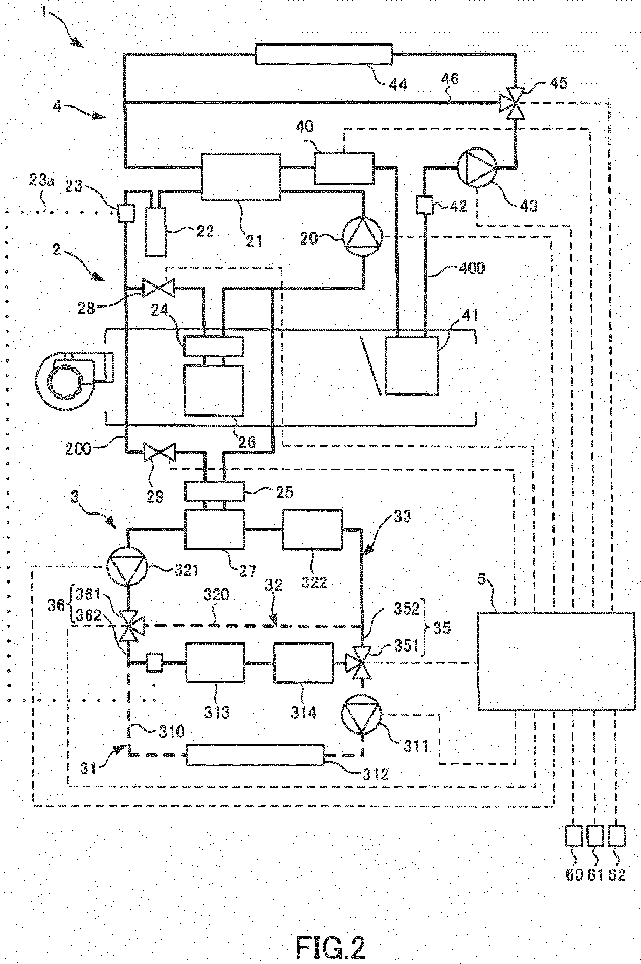

FIG. 2 is a diagram showing a battery warming circuit 33. In FIG. 2, in the low-water-temperature circuit 3, the flow paths of the battery warming circuit 33 are illustrated by solid lines, and other flow paths are illustrated by broken lines. In the vehicle air-conditioning device 1, the connection portion 35 and the connection portion 36 form the battery warming circuit 33. The battery warming circuit 33 has: the SC condenser 23; the motor 313 and the inverter 314; the battery 322; the refrigerant-water heat exchanger 27; the water pump 321; and the three-way valve 351 and the three-way valve 361, and the battery warming circuit 33 is the heat transfer medium circuit in which the cooling water circulates through these components. In the battery warming circuit 33, the water pump 321, the three-way valve 361, the SC condenser 23, the motor 313 and the inverter 314, the three-way valve 351, the battery 322, and the refrigerant-water heat exchanger 27 are provided in this order along the flow direction of the cooling water. In the vehicle air-conditioning device 1, the SC condenser 23 can be provided in the driving-device circuit 31 so as to be included in the battery warming circuit 33.

In the vehicle air-conditioning device 1, the three-way valve 351 and the three-way valve 361 allow the communication between the driving-device circuit 31 and the battery circuit 32, and thereby, the battery warming circuit 33 is formed. In addition, the communication between the driving-device circuit 31 and the battery circuit 32 is shut off by the three-way valve 351 and the three-way valve 361, and thereby, the driving-device circuit 31 and the battery circuit 32 are formed. The battery warming circuit 33 is one example of a battery warming circuit in which the cooling water circulates through at least one of the SC condenser 23, the battery 322, and the refrigerant-water heat exchanger 27.

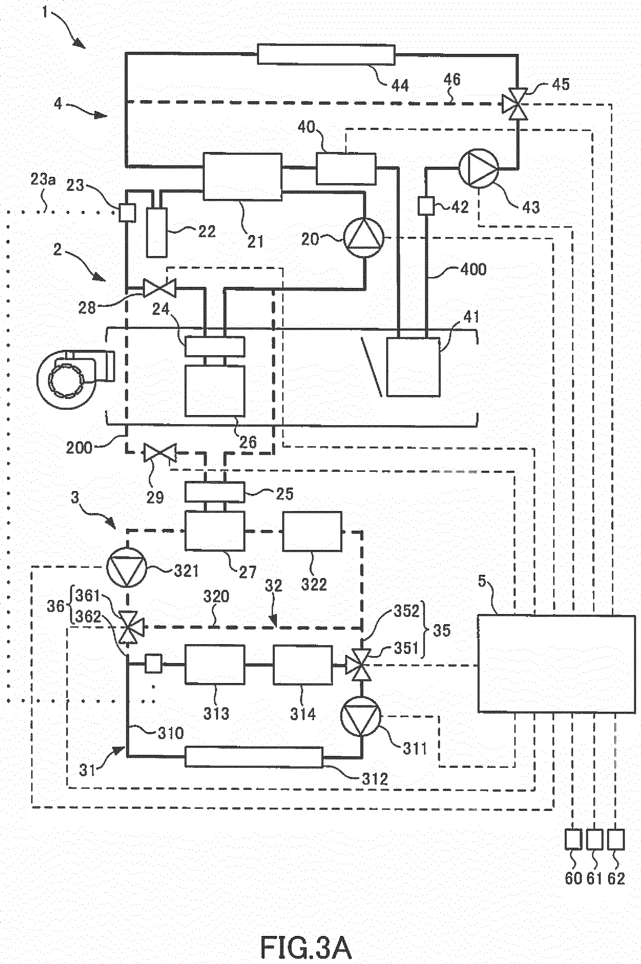

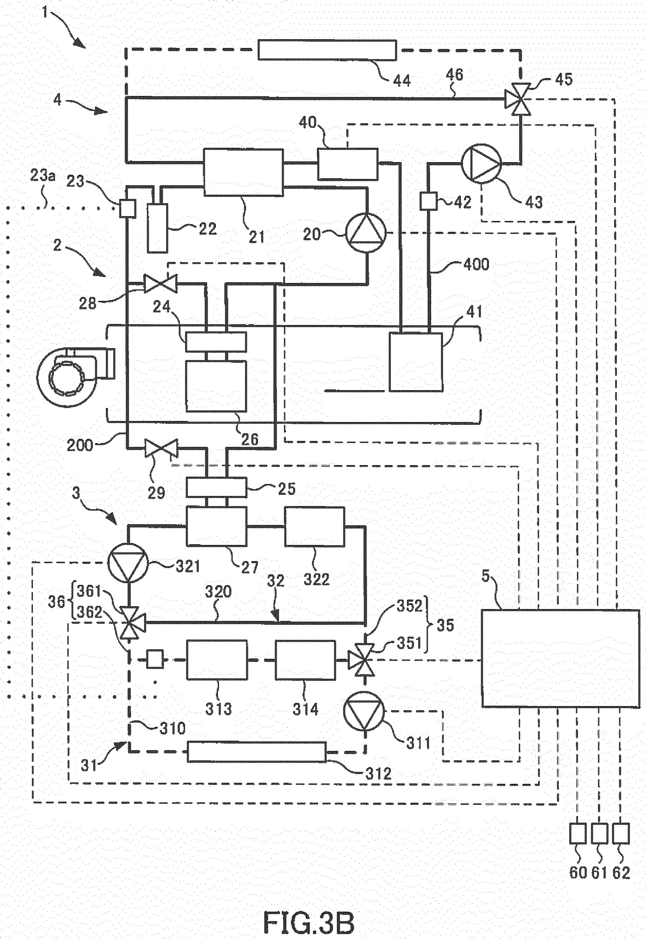

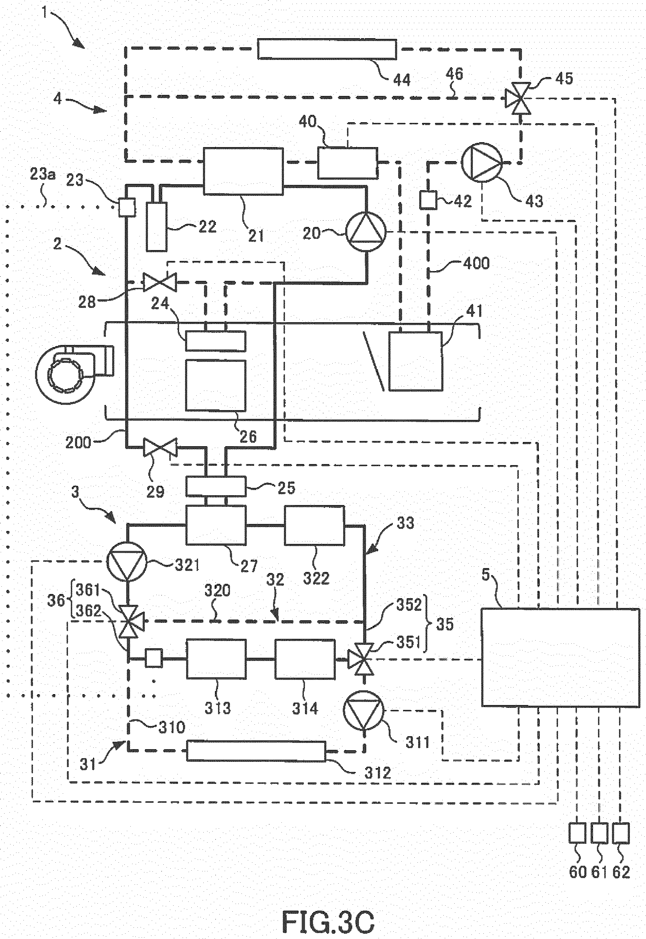

FIG. 3A is a diagram showing one example of the operating state of the vehicle air-conditioning device 1 at the time of the cooling operation. FIG. 3B is a diagram showing one example of the operating state of the vehicle air-conditioning device 1 at the time of the heating operation. FIG. 3C is a diagram showing one example of the operating state of the vehicle air-conditioning device 1 at the time of the charging operation of the battery 322. Specifically, the time of the charging operation of the battery 322 is the time at which the charging operation of the battery 322 is performed when warming of the battery is requested. In the following description, the time of the charging operation of the battery 322 is also referred to as the time of charging operation. In FIGs. 3A, 3B, and 3C, the flow paths through which the refrigerant flows and the flow paths through which the cooling water flows are illustrated by solid lines, and the flow paths through which neither of the refrigerant nor the cooling water flows are illustrated by broken lines.

For the refrigeration circuit 2, in the following description, a circuit in which the cooling water circulates through the compressor 20, the condenser 21, the liquid tank 22, the SC condenser 23, the solenoid valve 28, the expansion valve 24, the evaporator 26, and the compressor 20 in this order will be referred to as the cooling-operation circuit. In addition, a circuit in which the refrigerant circulates through the compressor 20, the condenser 21, the liquid tank 22, the SC condenser 23, the solenoid valve 29, the expansion valve 25, the refrigerant-water heat exchanger 27, and the compressor 20 in this order will be referred to as a heat exchange circuit.

For the high-water-temperature circuit 4, in the following description, a circuit in which the cooling water circulates through the condenser 21, the main heater 40, the heater core 41, the tank 42, the water pump 43, the three-way valve 45, the radiator 44, and the condenser 21 in this order will be referred to as a radiator circuit. In addition, a circuit in which the cooling water circulates through the condenser 21, the main heater 40, the heater core 41, the tank 42, the water pump 43, the three-way valve 45, and the condenser 21 in this order will be referred to as a the radiator diverting circuit.

As shown in FIG. 3A, at the time of the cooling operation, the refrigerant circulates through the cooling-operation circuit but not through the refrigeration circuit 2. In addition, in the low-water-temperature circuit 3, the cooling water circulates through the driving-device circuit 31. In addition, in the high-water-temperature circuit 4, the cooling water circulates through the radiator circuit. At the time of the cooling operation, each of the three-way valve 351 and the three-way valve 361 shuts off the communication between the cooling water flow path 310 and the cooling water flow path 320. In addition, the compressor 20, the water pump 311, and the water pump 43 are driven, and the water pump 321 is stopped. In addition, the solenoid valve 28 is opened, and the solenoid valve 29 is closed. In addition, the three-way valve 45 forms the radiator circuit. At the time of the cooling operation, the circulation of the cooling water through the battery circuit 32 is stopped. When the temperature of the battery 322 exceeds the suitable-temperature range, the refrigerant may further be circulated through the heat exchange circuit of the refrigeration circuit 2, and the cooling water may be circulated through the battery circuit 32. By doing so, it is possible to cool the battery 322.

As shown in FIG. 3B, at the time of the heating operation, in the refrigeration circuit 2, the refrigerant circulates through the cooling-operation circuit and the heat exchange circuit. In addition, in the low-water-temperature circuit 3, the cooling water circulates through the battery circuit 32. In addition, in the high-water-temperature circuit 4, the cooling water circulates through a battery diverting circuit. At the time of the heating operation, each of the three-way valve 351 and the three-way valve 361 shuts off the communication between the cooling water flow path 310 and the cooling water flow path 320. In addition, the compressor 20, the water pump 321, and the water pump 43 are driven, and the water pump 311 is stopped. In addition, the solenoid valve 28 and the solenoid valve 29 are opened. In addition, the three-way valve 45 forms the radiator diverting circuit. At the time of the heating operation, the circulation of the cooling water through the driving-device circuit 31 is stopped. At the time of the heating operation, the circulation of the refrigerant through the cooling-operation circuit may be stopped.

As shown in FIG. 3C, at the time of the charging operation, the refrigerant circulates through the heat exchange circuit in the refrigeration circuit 2. In addition, in the low-water-temperature circuit 3, the cooling water circulates through the battery warming circuit 33. As a result, in the low-water-temperature circuit 3, the cooling water circulates through at least one of the battery 322, the SC condenser 23, and the refrigerant-water heat exchanger 27. In the high-water-temperature circuit 4, the circulation of the cooling water is stopped. As a result, the heat of compression in the compressor 20 is released in the SC condenser 23 to the battery warming circuit 33, and the battery 322 is warmed. With this configuration, although absorption of the heat is performed by the refrigerant-water heat exchanger 27, the heat corresponding to the amount of work performed by the compressor 20 is secured for warming a battery 20.

At the time of the charging operation, each of the three-way valve 351 and the three-way valve 361 allows the communication between the cooling water flow path 310 and the cooling water flow path 320. In addition, the compressor 20 and the water pump 321 are driven, and the water pump 311 and the water pump 43 are stopped. In addition, the solenoid valve 28 is closed, and the solenoid valve 29 is opened. At the time of the charging operation, the refrigerant may be further circulated through the cooling-operation circuit. In order to achieve this, the solenoid valve 28 should be opened.

In the vehicle air-conditioning device 1, it is possible to store a part of the heat released from the SC condenser 23 in the battery 322 at the time of the charging operation. By transferring the heat stored in the battery 322 at the time of the charging operation into the high-water-temperature circuit 4 via the refrigeration circuit 2 at the time of the heating operation, it is possible to warm the air by the heater core 41. In other words, in the vehicle air-conditioning device 1, it is possible to utilize the battery 322 as a heat source that is usable for the heating operation.

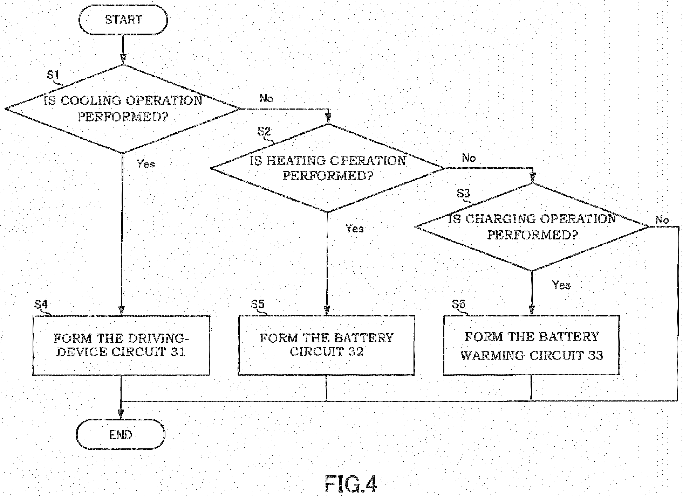

Next, one example of the control performed by the controller 5 will be described using a flowchart shown in FIG. 4. In this example, a description is given for a case in which the cooling operation and the heating operation are performed at the time of the non-charging operation of the battery 322 and the charging operation of the battery 322 is performed when the air-conditioning is stopped. In this example, formation of the circuit in the low-water-temperature circuit 3 will be described mainly.

In Step S1, the controller 5 judges whether or not the cooling operation is performed. In the case of a negative judgment, the controller 5 judges whether or not the heating operation is performed in Step S2. It is possible to judge whether or not the cooling operation is performed or whether or not the heating operation is performed on the basis of the output of the A/C switch 60 and the temperature adjusting switch 61, for example. In the case of a negative judgment in Step S2, the controller 5 judges whether or not the charging operation is performed in Step S3. It is possible to judge whether or not the charging operation is performed on the basis of the output of the connection detection sensor 62, for example. It may also be possible to judge whether or not the cooling operation is performed, whether or not the heating operation is performed, and whether or not the charging operation is performed by utilizing other methods including the known techniques.

In the case of an affirmative judgment in Step S1, the controller 5 controls the three-way valve 351 and the three-way valve 361 so as to form the driving-device circuit 31, in Step S4. Specifically, the controller 5 controls each of the three-way valve 351 and the three-way valve 361 so as to shut off the communication between the driving-device circuit 31 and the battery circuit 32.

In the case of an affirmative judgment in Step S2, the controller 5 controls the three-way valve 351 and the three-way valve 361 so as to form the battery circuit 32, in Step S5. Specifically, the controller 5 controls each of the three-way valve 351 and the three-way valve 361 so as to shut off the communication between the driving-device circuit 31 and the battery circuit 32.

In the case of an affirmative judgment in Step S3, the controller 5 controls the three-way valve 351 and the three-way valve 361 so as to form the battery warming circuit 33, in Step S6. Specifically, the controller 5 controls each of the three-way valve 351 and the three-way valve 361 so as to allow the communication between the driving-device circuit 31 and the battery circuit 32. After Steps S4, S5, and S6, the controller 5 finishes the process of this flowchart.

In Step S4, the controller 5 can further drive the water pump 311 and stop the water pump 321. By doing so, it is possible to circulate the cooling water through the driving-device circuit 31. In addition, it is possible to stop the circulation of the cooling water in the battery circuit 32. In Step S4, the controller 5 can further open the solenoid valve 28, close the solenoid valve 29, and drive the compressor 20. By doing so, it is possible to circulate the refrigerant through the cooling-operation circuit. In Step S4, the controller 5 can further control the three-way valve 45 so as to form the radiator circuit, and drive the water pump 43. By doing so, it is possible to circulate the cooling water through the radiator circuit.

In Step S5, the controller 5 can further stop the water pump 311 and drive the water pump 321. By doing so, it is possible to circulate the cooling water through the battery circuit 32. In addition, it is possible to stop the circulation of the cooling water in the driving-device circuit 31. In Step S5, the controller 5 can further open the solenoid valve 28 and the solenoid valve 29 and drive the compressor 20. By doing so, it is possible to circulate the refrigerant through the cooling-operation circuit and the heat exchange circuit. In Step S5, the controller 5 can further control the three-way valve 45 so as to form the radiator diverting circuit and drive the water pump 43. By doing so, it is possible to circulate the cooling water through the radiator diverting circuit.

In Step S6, the controller 5 can further stop the water pump 311 and drive the water pump 321. By doing so, it is possible to circulate the cooling water through the battery warming circuit 33. In Step S6, the controller 5 can further close the solenoid valve 28, open the solenoid valve 29, and drive the compressor 20. By doing so, it is possible to circulate the refrigerant through the heat exchange circuit. In Step S6, the controller 5 can further stop the water pump 43. By doing so, it is possible to stop the circulation of the cooling water in the high-water-temperature circuit 4. In Step S6, the controller 5 may further open the solenoid valve 28.

The case in which the states of the three-way valve 351 and the three-way valve 361, with which the driving-device circuit 31 has already been made, are kept in Step S4 is also included in the control of the three-way valve 351 and the three-way valve 361 that is performed so as to form the driving-device circuit 31 at the time of the cooling operation. In a similar manner, the above description is applied to a case in which the controller 5 controls other control targets.

Next, main operational advantages of the vehicle air-conditioning device 1 will be described.

The vehicle air-conditioning device 1 includes the refrigeration circuit 2 and the low-water-temperature circuit 3. By performing the heat exchange between the refrigerant and the low-water-temperature cooling water by the SC condenser 23, the heat is released from the refrigeration circuit 2 to the low-water-temperature circuit 3. According to another aspect of the vehicle air-conditioning device 1, the vehicle air-conditioning device 1 includes the refrigeration circuit 2. The refrigeration circuit 2 includes the condenser 21, the SC condenser 23, and the evaporator 26, and the SC condenser 23 performs the heat exchange between the refrigerant and the low-water-temperature cooling water, which is one example of fluid different from the high-water-temperature cooling water. The high-water-temperature cooling water is one example of the fluid that is used for the heat exchange with the refrigerant performed by the condenser 21.

With the vehicle air-conditioning device 1 having such configurations, it is possible to promote cooling of the refrigerant by the SC condenser 23. As a result, it is possible to achieve energy saving at the time of the cooling operation. Specifically, with the vehicle air-conditioning device 1 having such configurations, it is possible to achieve energy saving by the improvement in the efficiency of the refrigeration circuit 2. Among the vehicle air-conditioning device 1 having such configurations, the vehicle air-conditioning device including the low-water-temperature circuit 3 makes it possible to achieve energy saving at the time of the cooling operation in the case in which the low-water-temperature circuit 3 has a configuration including at least the sub-radiator 312. In the case in which the vehicle air-conditioning device 1 has a configuration that further has the battery 322, the motor 313, and the inverter 314, which are examples of the electric devices, it is possible to further use the heat from the battery 322, the motor 313, and the inverter 314 for the heating operation. With the vehicle air-conditioning device 1 having such configurations, as compared with the case described below for example, it is possible to promote the cooling of the refrigerant.

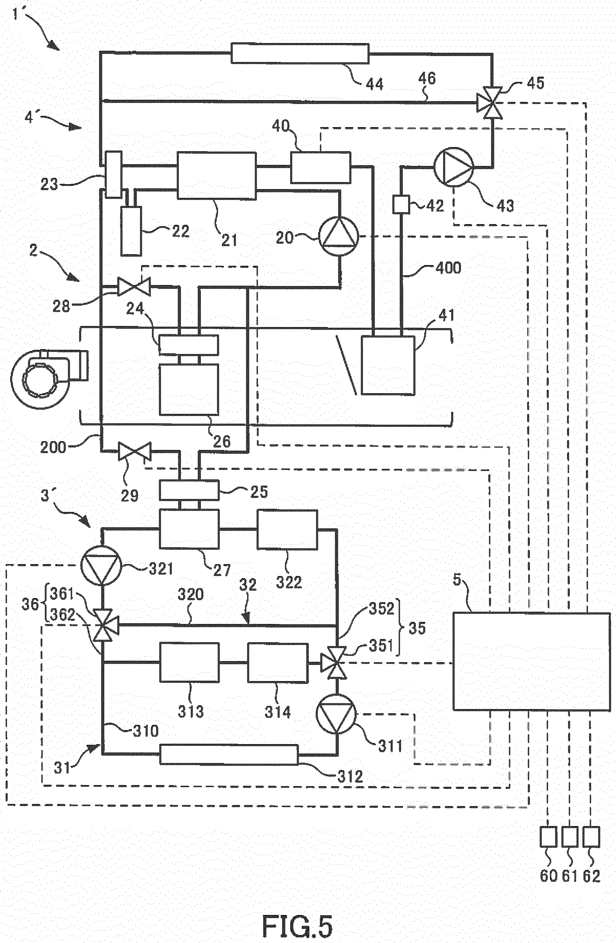

FIG. 5 is a diagram showing the vehicle air-conditioning device 1' that is a comparative example of the vehicle air-conditioning device 1. The low-water-temperature circuit 3' shows the low-water-temperature circuit 3 without the SC condenser 23. The high-water-temperature circuit 4' shows the high-water-temperature circuit 4 further having the SC condenser 23. With the vehicle air-conditioning device 1', the SC condenser 23 is provided such that, the heat is released to the high-water-temperature circuit 4' by performing the heat exchange between the refrigerant and the high-water-temperature cooling water. However, in order to promote cooling of the refrigerant by the vehicle air-conditioning device 1', a size of the radiator 44, for example, needs to be increased.

In light of the above-described circumstances, with the vehicle air-conditioning device 1 having the above-mentioned configuration, as compared with the vehicle air-conditioning device 1', it is possible to promote the cooling of the refrigerant by releasing the heat from the refrigeration circuit 2 to the low-water-temperature circuit 3 by the SC condenser 23. As a result, it is possible to avoid the increase in the size of the radiator 44. As with a vehicle air-conditioning device 1A and a vehicle air-conditioning device 1B, which will be described later, the vehicle air-conditioning device 1 having the above-mentioned configuration needs not have the battery circuit 32.

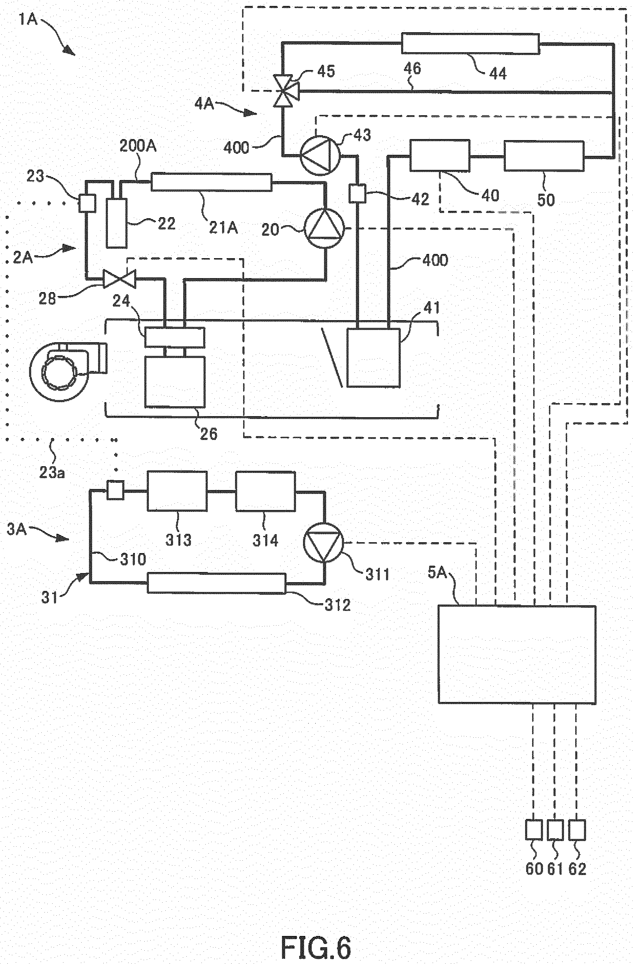

FIG. 6 is a diagram showing the vehicle air-conditioning device 1A that is a first modification of the vehicle air-conditioning device 1. The vehicle air-conditioning device 1A includes a refrigeration circuit 2A instead of the refrigeration circuit 2, a low-water-temperature circuit 3A instead of the low-water-temperature circuit 3, a high-water-temperature circuit 4A instead of the high-water-temperature circuit 4, and a controller 5A instead of the controller 5.

Other than the points shown below, the refrigeration circuit 2A is essentially the same as the refrigeration circuit 2. In other words, the refrigeration circuit 2A has a condenser 21A instead of the condenser 21. In addition, the refrigeration circuit 2A does not have the solenoid valve 29, the expansion valve 25, and the refrigerant-water heat exchanger 27. In addition, the refrigeration circuit 2A has a refrigerant flow path 200A instead of the refrigerant flow path 200.

The compressor 20, the condenser 21A, the liquid tank 22, the SC condenser 23, the solenoid valve 28, the expansion valve 24, and the evaporator 26 are provided in this order along the flow direction of the refrigerant. These components are connected by the refrigerant flow path 200A such that the refrigerant can be circulated therethrough. The condenser 21A is one example of the condensation unit, and specifically, the condenser 21A is an air-cooled condenser that performs the heat exchange between the refrigerant and the air. More specifically, the condenser 21A is an outside condenser that performs the heat exchange with the outside air of the vehicle cabin. The outside air of the vehicle cabin is the air that is not used for the air-conditioning, such as for example, the air flow caused by movement of the vehicle and by a fan.

The low-water-temperature circuit 3A is formed by the driving-device circuit 31. In the low-water-temperature circuit 3A, the arrangement of the SC condenser 23 may be different. The high-water-temperature circuit 4A is essentially the same as the high-water-temperature circuit 4 except that the high-water-temperature circuit 4A does not have the condenser 21 and further having an engine 50. In the high-water-temperature circuit 4A, the engine 50 is provided between the radiator 44 and the main heater 40. A flow pattern of the cooling water is similar to that in the high-water-temperature circuit 4. As the control targets, the compressor 20, the solenoid valve 28, the water pump 311, the main heater 40, the water pump 43, and the three-way valve 45 are electrically connected to the controller 5A. In addition, the A/C switch 60, the temperature adjusting switch 61, and the connection detection sensor 62 are electrically connected to the controller 5A.

The vehicle air-conditioning device 1A having such a configuration includes the refrigeration circuit 2A and the low-water-temperature circuit 3A. The SC condenser 23 performs the heat exchange between the refrigerant and the low-water-temperature cooling water, thereby releasing the heat to the low-water-temperature circuit 3A. According to another aspect, the vehicle air-conditioning device 1A having such a configuration includes the refrigeration circuit 2A. The SC condenser 23 performs the heat exchange between the refrigerant and the low-water-temperature cooling water that is one example of the fluid different from the air. The air is one example of the fluid that is used for the heat exchange with the refrigerant performed by the condenser 21A. With the vehicle air-conditioning device 1A having such a configuration, it is also possible to achieve energy saving at the time of the cooling operation. With the vehicle air-conditioning device 1A, it is also possible to recover waste heat from the engine 50 with the high-water-temperature cooling water and use it for the heating operation.

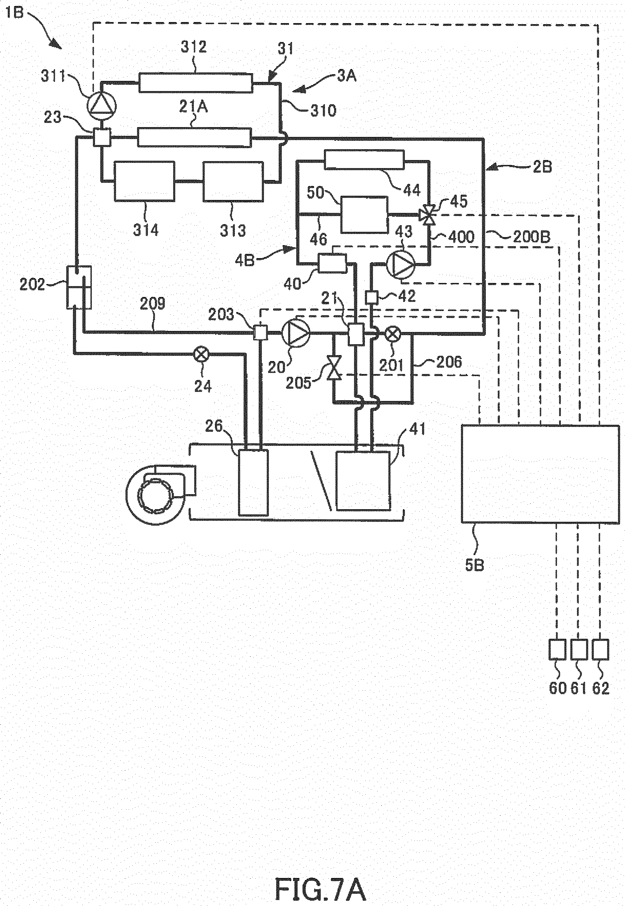

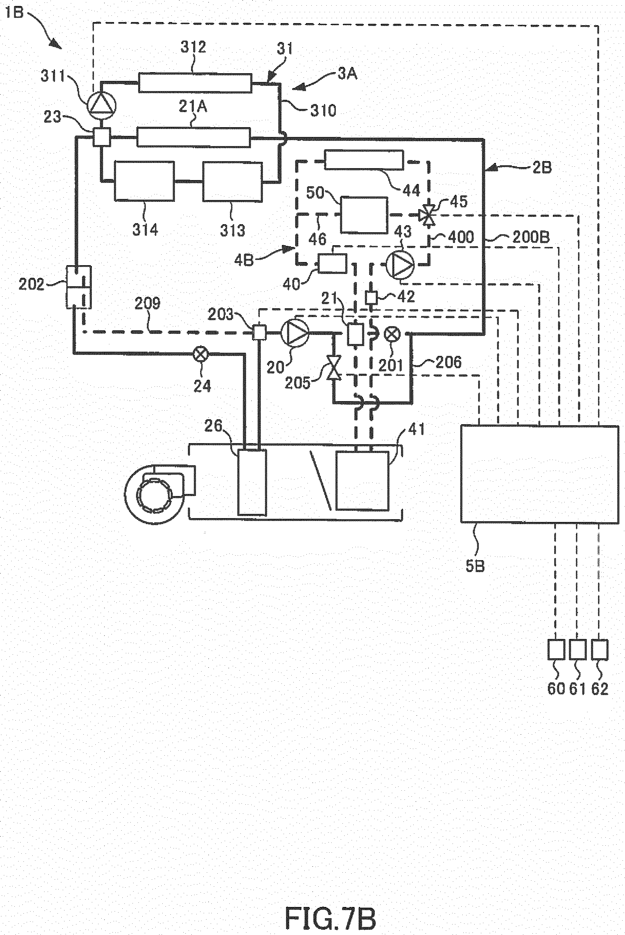

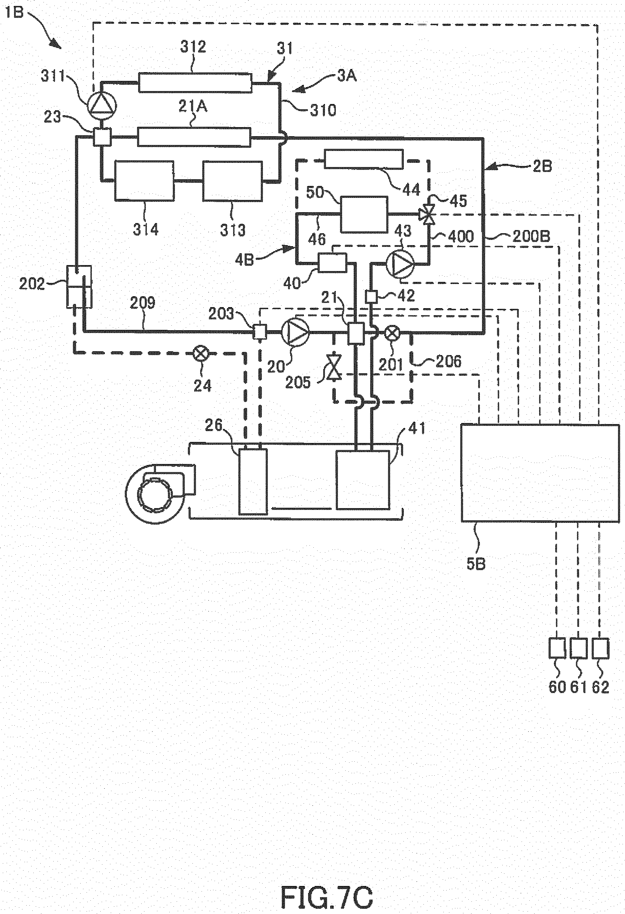

FIG. 7A is a diagram showing the vehicle air-conditioning device 1B that is a second modification of the vehicle air-conditioning device 1. FIG. 7B is a diagram showing one example of the operating state at the time of the cooling operation of the vehicle air-conditioning device 1B. FIG. 7C is a diagram showing one example of the operating state at the time of the heating operation of the vehicle air-conditioning device 1B. In FIGs. 7B and 7C, the flow paths through which the refrigerant flows and the flow paths through which the cooling water flows are illustrated by solid lines, and the flow paths through which neither of the refrigerant nor the cooling water flows are illustrated by broken lines.

As shown in FIG. 7A, the vehicle air-conditioning device 1B is essentially the same as the vehicle air-conditioning device 1A, except that the vehicle air-conditioning device 1B includes a refrigeration circuit 2B instead of the refrigeration circuit 2A, a high-water-temperature circuit 4B instead of the high-water-temperature circuit 4A, and a controller 5B instead of the controller 5A.

The refrigeration circuit 2B has the compressor 20, the condenser 21, an expansion valve 201, the condenser 21A, the SC condenser 23, an accumulator 202, a three-way valve 203, the expansion valve 24, the evaporator 26, a solenoid valve 205, and a refrigerant flow path 200B. The compressor 20, the condenser 21, the expansion valve 201, the condenser 21A, the SC condenser 23, the accumulator 202, the expansion valve 24, the evaporator 26, and the three-way valve 203 are provided in this order along the flow direction of the refrigerant. These components are connected by the refrigerant flow path 200B such that the refrigerant can be circulated therethrough. The refrigerant flow path 200B includes a bypass flow path 206. The bypass flow path 206 bypasses the condenser 21 and the expansion valve 201. As shown in FIG. 7A, the bypass flow path 206 bypasses the condenser 21 and is connected to the condenser 21A. Furthermore, the refrigerant flow path 200B includes a bypass flow path 209 that connects the accumulator 202 and the three-way valve 203 so as to bypass the expansion valve 24 and the evaporator 26.

With the vehicle air-conditioning device 1B, the condenser 21 is used at the time of the heating operation. The condenser 21 is one example of the condensation unit for a heat pump that condenses the refrigerant that has been compressed by the compressor 20. The expansion valve 201 is one example of the expansion unit for the heat pump that expands the refrigerant that has been condensed by the condenser 21. The condenser 21A is one example of the condensation unit, and at the same time, the condenser 21A is one example of a heat exchange unit that functions as the condensation unit at the time of the cooling operation and that functions, at the time of the heating operation, as the evaporation unit for the heat pump that evaporates the refrigerant that has been expanded by the expansion valve 201. Specifically, the heat exchange unit is an outside heat exchange unit that performs the heat exchange between the refrigerant and the outside air of the vehicle cabin.

The accumulator 202 is one example of a gas/liquid separator that performs gas-liquid separation of the refrigerant, which has entered inside, and stores excessive refrigerant. The three-way valve 203 and the expansion valve 24 are connected to a gas-phase-side exit of the accumulator 202 and a liquid-phase-side exit of the accumulator 202, respectively. The three-way valve 203 switches between a state in which the accumulator 202 communicates with the compressor 20 and a state in which the evaporator 26 communicates with the compressor 20.

The solenoid valve 205 is provided at the bypass flow path 206. The solenoid valve 205 is one example of a third valve unit that is the valve unit that changes the flowing state of the refrigerant of the bypass flow path 206. Specifically, the solenoid valve 205 is the open/close valve. The solenoid valve 205 may be the opening adjustable valve. The solenoid valve 205 and the bypass flow path 206 are examples of a condenser bypass portion that forms a circuit diverted from the condenser 21.

The high-water-temperature circuit 4B has the main heater 40, the condenser 21, the heater core 41, the tank 42, the water pump 43, the radiator 44, the three-way valve 45, the engine 50, and the cooling water flow path 400. The condenser 21 is provided between the main heater 40 and the heater core 41. The engine 50 is provided on the bypass flow path 46. The flow pattern of the cooling water is similar to that in the high-water-temperature circuit 4. The compressor 20, the three-way valve 203, the solenoid valve 205, the water pump 311, the main heater 40, the water pump 43, and the three-way valve 45 are electrically connected to the controller 5B as the control targets. In addition, the A/C switch 60, the temperature adjusting switch 61, and the connection detection sensor 62 are electrically connected to the controller 5B.

The operating states of the vehicle air-conditioning device lob at the time of the cooling operation and at the time of the heating operation are as follows. As shown in FIG. 7B, at the time of the cooling operation, the three-way valve 203 allows communication between the evaporator 26 and the compressor 20, and the solenoid valve 205 is opened. As a result, in the refrigeration circuit 2B, the refrigerant flows through the compressor 20, the solenoid valve 205, the condenser 21A, the SC condenser 23, the accumulator 202, the expansion valve 24, the evaporator 26, and the three-way valve 203 in this order. In the low-water-temperature circuit 3A, the cooling water is circulated. In the high-water-temperature circuit 4B, the circulation of the cooling water is stopped. Therefore, at the time of the cooling operation, the heat of the refrigerant is released at the condenser 21A and the SC condenser 23, and the heat of the refrigerant is absorbed at the evaporator 26. By releasing the heat at the SC condenser 23, supercooling is promoted.

As shown in FIG. 7C, at the time of the heating operation, the three-way valve 203 allows communication between the accumulator 202 and the compressor 20, and the solenoid valve 205 is closed. As a result, in the refrigeration circuit 2B, the refrigerant flows through the compressor 20, the condenser 21, the expansion valve 201, the condenser 21A, the SC condenser 23, the accumulator 202, and the three-way valve 203 in this order. In the low-water-temperature circuit 3A and the high-water-temperature circuit 4B, the cooling water is circulated. In the high-water-temperature circuit 4B, the three-way valve 45 forms the radiator diverting circuit further including the engine 50. As a result, in the high-water-temperature circuit 4B, the cooling water circulates through the radiator diverting circuit. Therefore, at the time of the heating operation, the heat of the refrigerant is released at the condenser 21, and the refrigerant absorbs the heat from the outside air at the condenser 21A. In addition, at the SC condenser 23, the refrigerant absorbs the waste heat from the motor 313 and the inverter 314 via the low-water-temperature circuit 3A.

The vehicle air-conditioning device 1B having such a configuration includes the refrigeration circuit 2B and the low-water-temperature circuit 3A. The SC condenser 23 performs the heat exchange between the refrigerant and the low-water-temperature cooling water, thereby releasing the heat to the low-water-temperature circuit 3A. According to another aspect, the vehicle air-conditioning device 1B having such a configuration includes the refrigeration circuit 2B. The SC condenser 23 performs the heat exchange between the refrigerant and the low-water-temperature cooling water that is the fluid different from the air. The air is one example of the fluid that is used for the heat exchange with the refrigerant performed by the condenser 21A. With the vehicle air-conditioning device 1B having such a configuration, it is also possible to achieve energy saving at the time of the cooling operation.

With the vehicle air-conditioning device 1B, it is possible to recover the waste heat from the engine 50 with the high-water-temperature cooling water and use it for the heating operation. In the vehicle air-conditioning device 1B, the SC condenser 23 can also function as an evaporating unit at the time of the heating operation. As a result, the SC condenser 23 can also recover the waste heat of the motor 313 and the inverter 314 and use it for the heating operation.

The vehicle air-conditioning device 1B capable of recovering the waste heat as described above is more suitable for a case in which a vehicle is a hybrid vehicle using the engine 50 and the motor 313 as driving motive-power sources. In this case, for example, it is possible to recover the waste heat of the engine 50 when the vehicle is driven by an engine, and to recover the waste heat of the motor 313 and the inverter 314 when the vehicle is stopped or driven by a motor. As a result, it is possible to effectively recover the waste heat and use it for the heating operation.

Specifically, the vehicle air-conditioning device 1 has a configuration in which: the evaporation unit that evaporates the refrigerant includes the evaporator 26 and the refrigerant-water heat exchanger 27; the electric device that heat the low-water-temperature cooling water includes the battery 322, the motor 313, and the inverter 314; and the low-water-temperature circuit 3 includes the driving-device circuit 31 and the battery circuit 32.

With the vehicle air-conditioning device 1 having such a configuration, at the time of the cooling operation, it is possible to achieve energy saving at the time of the cooling operation by releasing the heat from the refrigeration circuit 2 to the driving-device circuit 31 by the SC condenser 23. In addition, at the time of the heating operation, it is possible to achieve energy saving during the heating operation by releasing the heat from the battery circuit 32 to the refrigeration circuit 2 by the refrigerant-water heat exchanger 27. Therefore, with the vehicle air-conditioning device 1 having such a configuration, it is possible to achieve energy saving at the time of both the cooling operation and the heating operation. With the vehicle air-conditioning device 1 having such a configuration, because of the arrangement of the SC condenser 23, it is also possible to realize the operating state at the time of the cooling operation, at the time of the heating operation, and at the time of the charging operation as shown in FIGs. 3A, 3B, and 3C.

Specifically, with the vehicle air-conditioning device 1 having such a configuration, by releasing the heat from the refrigeration circuit 2 to the high-water-temperature circuit 4 by the condenser 21, it is possible to achieve energy saving of the heating operation by the high-water-temperature circuit 4. However, it is not limited thereto, and the vehicle air-conditioning device 1 having such a configuration can be applied even in a case in which the refrigeration circuit 2 is configured to further perform the heating operation. This point will be described later.

Specifically, the vehicle air-conditioning device 1 has a configuration in which, at the time of the heating operation, the circulation of the cooling water through the driving-device circuit 31 is stopped. With the vehicle air-conditioning device 1 having such a configuration, at the time of the heating operation, the release of the heat from the refrigeration circuit 2 to the driving-device circuit 31 by the SC condenser 23 is suppressed. As a result, it is possible to achieve further energy saving of the heating operation.

Specifically, the vehicle air-conditioning device 1 has a configuration in which, at the time of the charging operation, the cooling water circulates through at least the battery 322, the SC condenser 23, and the refrigerant-water heat exchanger 27 in the low-water-temperature circuit 3. More specifically, the vehicle air-conditioning device 1 has a configuration in which, at the time of the charging operation, the cooling water circulates through the battery warming circuit 33.

With the vehicle air-conditioning device 1 having such a configuration, it is possible to warm the battery 322 while recovering, at the refrigerant-water heat exchanger 27, the heat that has been released at the SC condenser 23. As a result, it is possible to utilize the work of the compressor 20 to the warming of the battery 322. With the vehicle air-conditioning device 1 having such a configuration, it is also possible to eliminate the need of an electric heater for warming the battery 322 or to achieve reduction in frequency of use of the electric heater.

Specifically, the vehicle air-conditioning device 1 has a configuration in which: the low-water-temperature circuit 3 includes the connection portion 35 and the connection portion 36; the connection portion 35 includes the three-way valve 351 and the connecting flow path 352; the connection portion 36 includes the three-way valve 361 and the connecting flow path 362; and the connection portion 35 and the connection portion 36 form the battery warming circuit 33. In other words, in a case in which the vehicle air-conditioning device 1 specifically has such a configuration for example, it is possible to warm the battery 322.

Specifically, the vehicle air-conditioning device 1 has a configuration further including the controller 5 that controls the three-way valve 351 and the three-way valve 361 so as to form the driving-device circuit 31 at the time of the cooling operation, form the battery circuit 32 at the time of the heating operation, and form the battery warming circuit 33 at the time of the charging operation of the battery 322. In other words, in a case in which the vehicle air-conditioning device 1 specifically has such a configuration for example, it is possible to form the driving-device circuit 31 at the time of the cooling operation, form the battery circuit 32 at the time of the heating operation, and form the battery warming circuit 33 at the time of the charging operation of the battery 322.

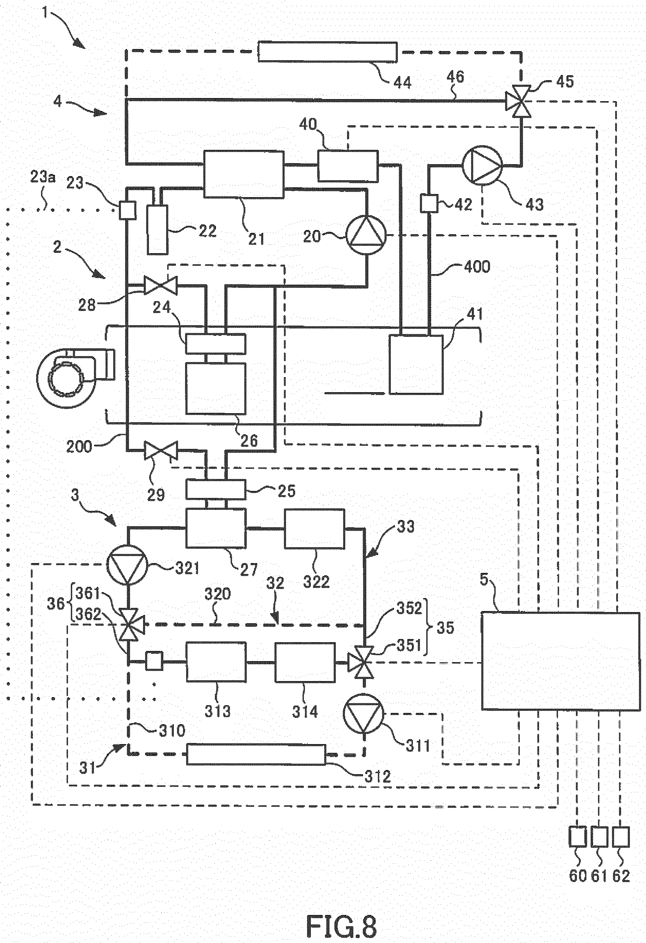

The vehicle air-conditioning device 1 may have a configuration in which the controller 5 controls the three-way valve 351 and the three-way valve 361 so as to form the battery warming circuit 33 at the time of the heating operation. FIG. 8 is a diagram showing another example of the operating state of the vehicle air-conditioning device 1 at the time of the heating operation. In this example, at the time of the heating operation, the cooling water circulates through at least between the SC condenser 23 and the refrigerant-water heat exchanger 27 in the low-water-temperature circuit 3. Specifically, the cooling water circulates through the battery warming circuit 33.

In this case, with the vehicle air-conditioning device 1, it is possible to use the heat of the motor 313 and the inverter 314 for the heating operation. In this case, with the vehicle air-conditioning device 1, it is possible to recover, at the refrigerant-water heat exchanger 27, the heat that has been released at the SC condenser 23. As a result, it is also possible to reduce loss in heat energy due to the heat release performed at the SC condenser 23.

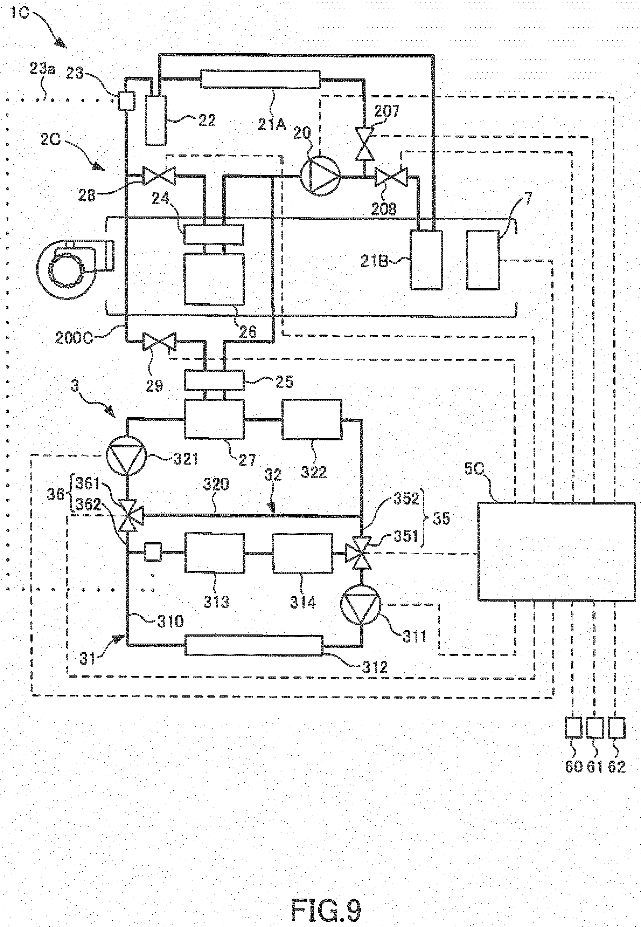

The vehicle air-conditioning device 1 may be configured such that the refrigeration circuit 2 further performs the heating operation. FIG. 9 is a diagram showing a vehicle air-conditioning device 1C that is a third modification of the vehicle air-conditioning device 1. Other than the points shown below, the vehicle air-conditioning device 1C is essentially the same as the vehicle air-conditioning device 1. In other words, the vehicle air-conditioning device 1C includes a refrigeration circuit 2C instead of the refrigeration circuit 2. The refrigeration circuit 2C is a circuit for performing the cooling operation and the heating operation. Therefore, the vehicle air-conditioning device 1C does not includes the high-water-temperature circuit 4. The vehicle air-conditioning device 1C includes a controller 5C instead of the controller 5. In addition, the vehicle air-conditioning device 1C further includes a PTC heater 7.

Other than the points shown below, the refrigeration circuit 2C is essentially the same as the refrigeration circuit 2. In other words, the refrigeration circuit 2C has the condenser 21A and a condenser 21B instead of the condenser 21. In addition, the refrigeration circuit 2C further has a solenoid valve 207 and a solenoid valve 208. In addition, the refrigeration circuit 2C has a refrigerant flow path 200C instead of the refrigerant flow path 200.

In the refrigeration circuit 2C, the solenoid valve 207 and the condenser 21A are provided between the compressor 20 and the liquid tank 22. The refrigerant flow path 200C forms the flow path that is similar to the refrigerant flow path 200 and connects the solenoid valve 208 and the condenser 21B in parallel to the solenoid valve 207 and the condenser 21A. The solenoid valve 207 is provided upstream of the condenser 21A. The solenoid valve 208 is provided upstream of the condenser 21B.

The condenser 21B is one example of the condensation unit, and specifically, the condenser 21B is the air-cooled condenser that performs the heat exchange between the refrigerant and the air. More specifically, the condenser 21B is an inside condenser that uses the air, which has been warmed by the heat exchange with the refrigerant, for the heating operation of the vehicle cabin. The solenoid valve 207 and the solenoid valve 208 are examples of the valve units that change the flowing state of the refrigerant. The solenoid valve 207 is one example of a fourth valve unit that is the valve unit that changes the flowing state of the refrigerant from the compressor 20 to the condenser 21A. The solenoid valve 208 is one example of a fifth valve unit that is the valve unit that changes the flowing state of the refrigerant from the compressor 20 to the condenser 21B. Specifically, the solenoid valve 207 and the solenoid valve 208 are the open/close valves. The solenoid valve 207 and the solenoid valve 208 may be the opening adjustable valves. By applying current to a conductive heat generating element part, the PTC heater 7 generates heat and warms the surrounding air.

The compressor 20, the solenoid valve 28, the solenoid valve 29, the solenoid valve 207, the solenoid valve 208, the water pump 311, the water pump 321, the three-way valve 351, the three-way valve 361, and the PTC heater 7 are electrically connected to the controller 5C as the control targets. In addition, the A/C switch 60, the temperature adjusting switch 61, and the connection detection sensor 62 are electrically connected to the controller 5C. Similar to the controller 5, the controller 5C can perform the control of the three-way valve 351 and the three-way valve 361 as described above using FIG. 4.

With the vehicle air-conditioning device 1C, the cooling operation is performed in a state in which the solenoid valve 207 is opened and the solenoid valve 208 is closed. In addition, the heating operation is performed in a state in which the solenoid valve 207 is closed and the solenoid valve 208 is opened. The vehicle air-conditioning device 1C includes the air-cooled condenser 21A and condenser 21B as the condensation units. The vehicle air-conditioning device 1C having such a configuration can also achieve operational advantages similar to those of the vehicle air-conditioning device 1.

With the vehicle air-conditioning device 1, the condensation performance of the condenser 21 is ensured by lowering the temperature of the high-water-temperature cooling water at the time of the cooling operation by releasing the heat by the radiator 44. However, in general, the condensation performance ensured in the fluid-cooled condenser 21 in this way tends to be lower than the condensation performance of the air-cooled condenser 21A. Therefore, in a case in which the condenser 21 is of a fluid-cooled type, which cools the refrigerant with liquid, it is more suitable to employ the vehicle air-conditioning device 1 that is capable of achieving energy saving at the time of the cooling operation by the improvement in the efficiency of the refrigeration circuit 2.

With the vehicle air-conditioning device 1, the control can also be performed in the following manner.

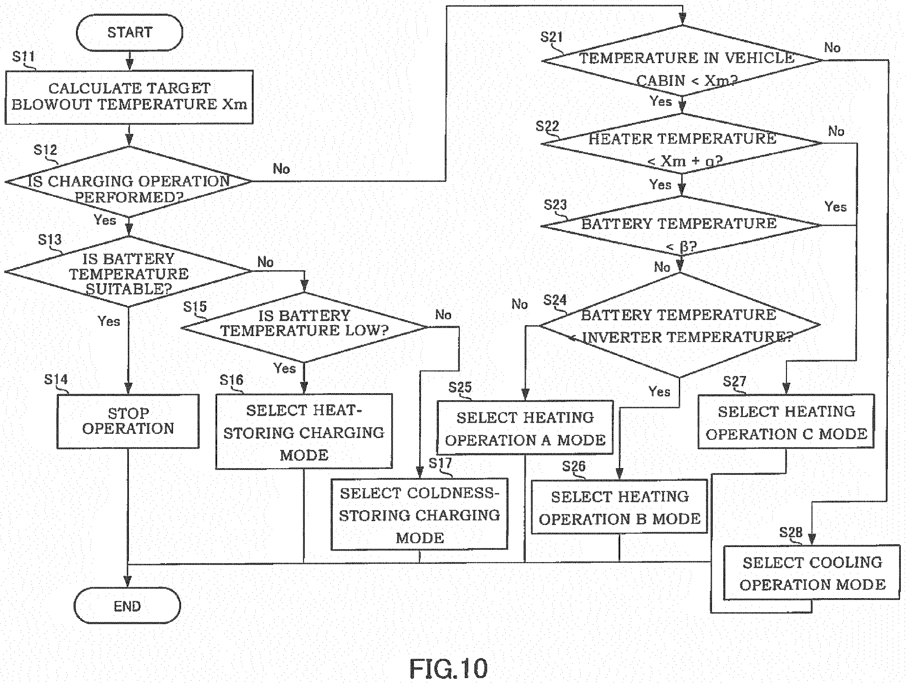

FIG. 10 is a diagram showing a flowchart of one example of another control that can be performed by the controller 5. In Step S11, the controller 5 calculates a target blowout temperature Xm of the air blown into the vehicle cabin during the vehicle-cabin air-conditioning. The target blowout temperature Xm is calculated on the basis of the output of the temperature adjusting switch 61, etc.

In Step S12, the controller 5 judges whether or not the charging operation is performed. In the case of a negative judgment, the process proceeds to Step S13. In this case, the controller 5 judges whether or not the battery temperature that is the temperature of the battery 322 is the suitable temperature. In the case of a negative judgment, the controller 5 stops operation of the vehicle air-conditioning device 1 in Step S14. Specifically, the controller 5 stops driving of the compressor 20, the water pump 311, the water pump 321, and the water pump 43. Subsequent to Step S14, the process of this flowchart is finished once.

In the case of a negative judgment in Step S13, the process proceeds to Step S15. In this case, the controller 5 judges whether or not the battery temperature is lower than the minimum temperature of the suitable-temperature range. The battery temperature can be detected on the basis of, for example, the outlet water temperature of the battery 322. The outlet water temperature of the battery 322 can be detected by, for example, a temperature sensor 73, which will be described later.

In the case of an affirmative judgment in Step S15, the controller 5 selects a heat-storing charging mode as an operation mode for operating the vehicle air-conditioning device 1 in Step S16. In the case of a negative judgment in Step S15, the controller 5 selects a coldness-storing charging mode as the operation mode in Step S17. The heat-storing charging mode and the coldness-storing charging mode will be described later. Subsequent to Steps S16 or S17, the process of this flowchart is finished once.

In the case of a negative judgment in Step S12, the process proceeds to Step S21. In this case, the controller 5 judges whether or not the temperature in the vehicle cabin is lower than the target blowout temperature Xm. In this step, it is judged whether the heating operation is to be performed or the cooling operation is to be performed. In the case of a negative judgment, the process proceeds to Step S22.

In Step S22, the controller 5 judges whether or not the heater water temperature, which is the temperature of the cooling water in the main heater 40, is lower than the temperature, which is higher than the target blowout temperature Xm by a predetermined temperature α. In addition, in the case of a negative judgment, the controller 5 judges whether or not the battery temperature is lower than a predetermined temperature β in Step S23.

The heater water temperature can be detected on the basis of, for example, the outlet water temperature of the main heater 40. The outlet water temperature of the main heater 40 can be detected by, for example, a temperature sensor 72, which will be described later. The predetermined temperature a is, for example, 8 °C.

The battery temperature can be detected on the basis of, for example, the outlet water temperature of the battery 322. The outlet water temperature of the battery 322 can be detected by, for example, the temperature sensor 73, which will be described later. The predetermined temperature β is, for example, the minimum temperature of the suitable-temperature range of the battery 322.

In Steps S22 and S23, it is judged whether or not the heating operation based on the target blowout temperature Xm is to be performed by the high-water-temperature circuit 4 alone. The predetermined temperature α and the predetermined temperature β can be set in advance on the basis of experiments etc.

In the case of an affirmative judgment in Step S22 and a negative judgment in Step S23, it is judged that the heating operation based on the target blowout temperature Xm should not be performed by the high-water-temperature circuit 4 alone. In this case, the process proceeds to Step S24.

In Step S24, the controller 5 judges whether or not the battery temperature is lower than the inverter temperature that is the temperature of the inverter 314. The inverter temperature can be detected on the basis of, for example, the outlet water temperature of the inverter 314. The outlet water temperature of the inverter 314 can be detected by, for example, a temperature sensor 74, which will be described later. In this step, by using the temperature of the inverter 314 arranged downstream of the motor 313, it is judged whether or not the battery temperature is lower than the temperature of a driving device including either one of the motor 313 and the inverter 314.

In the case of an affirmative judgment in Step S24, the process proceeds to Step S25. In this case, the controller 5 selects a heating operation A mode as the operation mode. In the case of a negative judgment in Step S24, the process proceeds to Step S26. In this case, the controller 5 selects a heating operation B mode as the operation mode. Details of the heating operation A mode and the heating operation B mode will be described later.

In the case of a negative judgment in Step S22 or an affirmative judgment in Step S23, the process proceeds to Step S27. In this case, the controller 5 selects a heating operation C mode as the operation mode. Details of the heating operation C mode will be described later. Subsequent to Step S25, S26, or S27, the process of this flowchart is finished once.

In the case of a negative judgment in Step S21, the process proceeds to Step S28. In this case, the controller 5 selects a cooling operation mode as the operation mode. Subsequent to Step S28, the process of this flowchart is finished once.

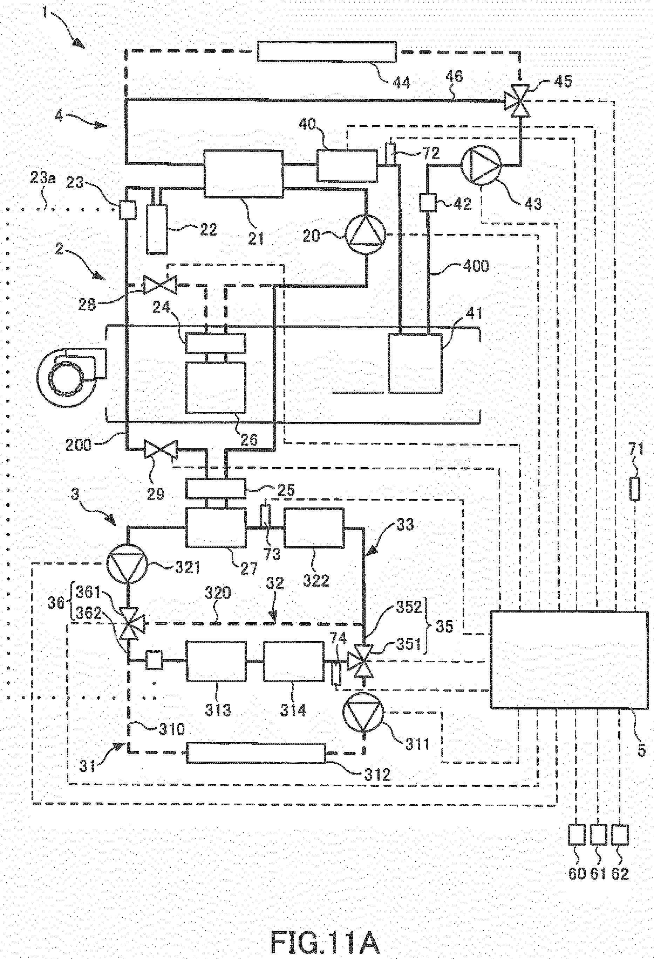

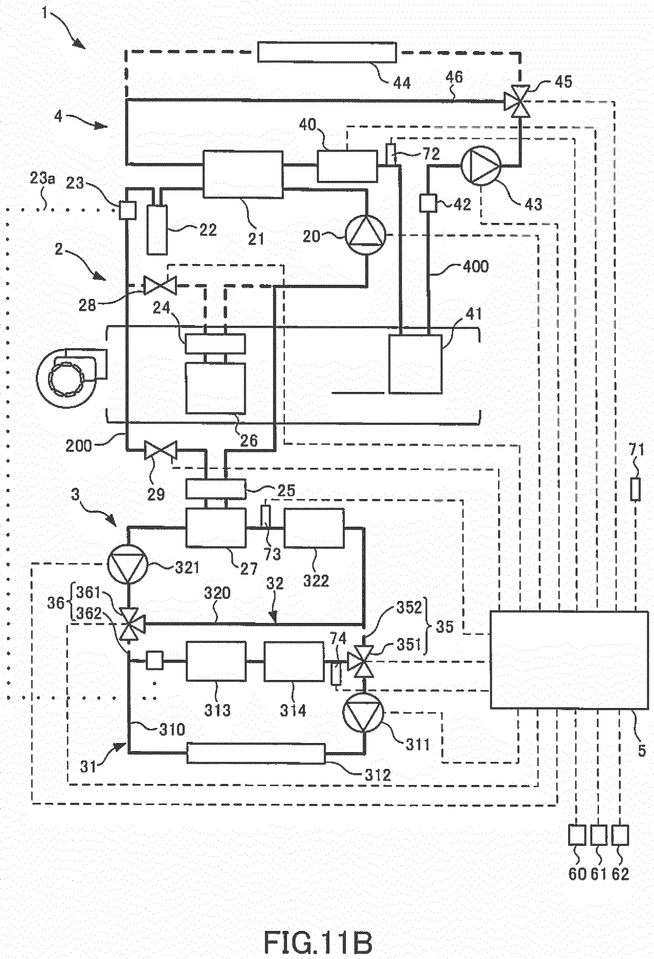

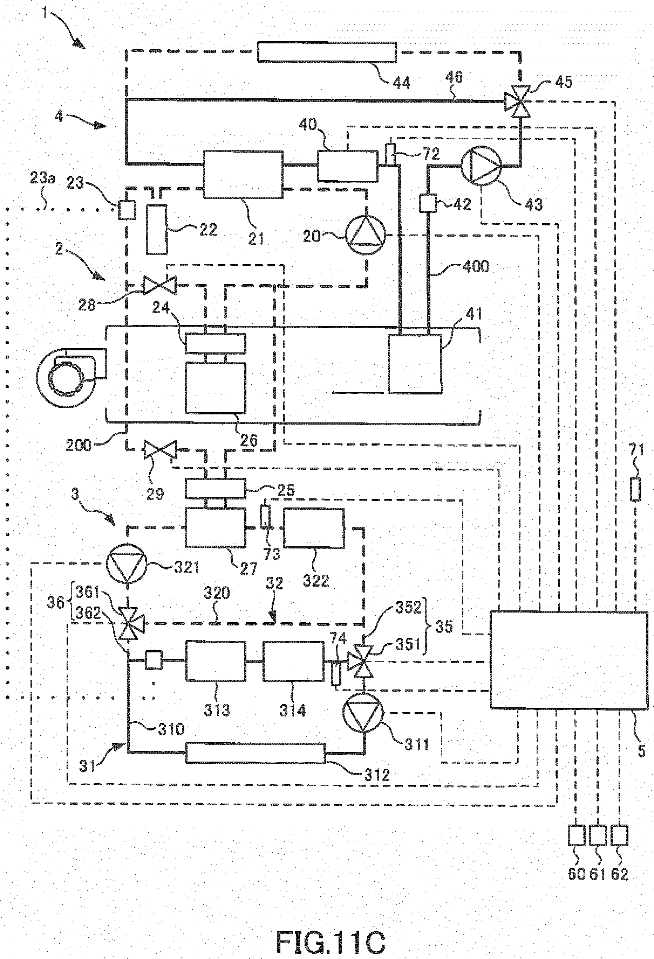

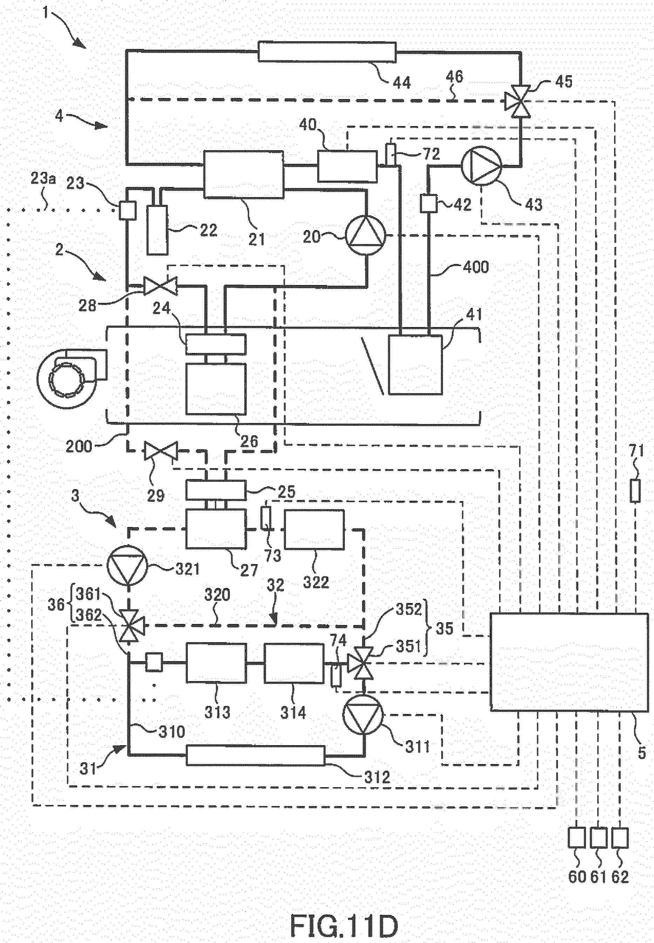

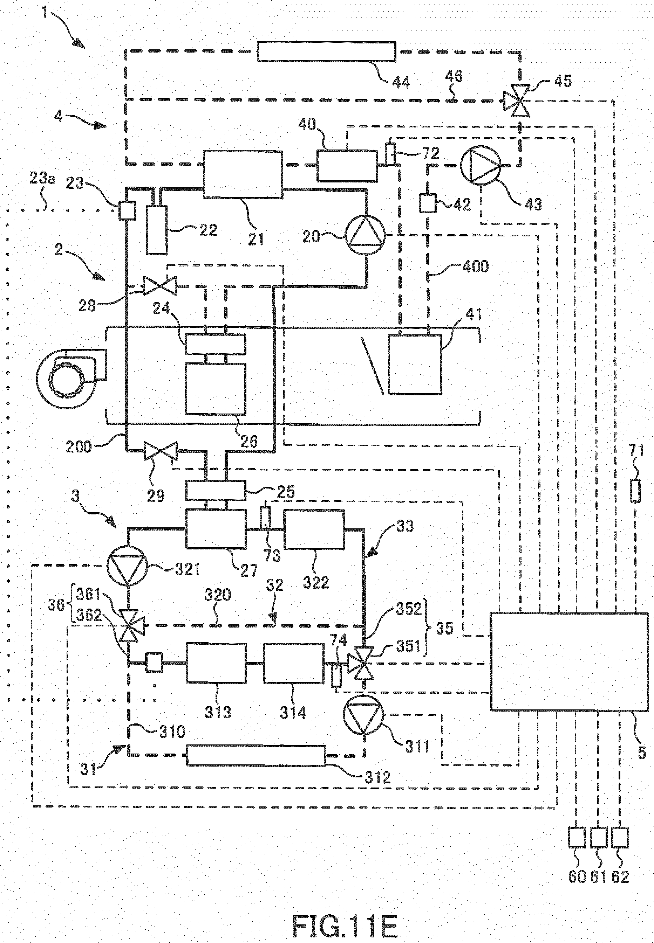

FIGs. 11A to 11F are diagrams showing examples of the operating states of the vehicle air-conditioning device 1 in accordance with respective operation modes. FIG. 11A shows the operating state when the operation mode is the heating operation A mode; FIG. 11B shows the operating state when the operation mode is the heating operation B mode; FIG. 11C shows the operating state when the operation mode is the heating operation C mode; and FIG. 11D shows the operating state when the operation mode is the cooling operation mode. FIG. 11E shows the operating state when the operation mode is the heat-storing charging mode, and FIG. 11F shows the operating state when the operation mode is the coldness-storing charging mode. In FIGs. 11A to 11F, the flow paths through which the refrigerant flows and the flow paths through which the cooling water flows are illustrated by solid lines, and the flow paths through which neither of the refrigerant nor the cooling water flows are illustrated by broken lines.

As shown in FIGs. 11A to 11F, the vehicle air-conditioning device 1 further includes a temperature sensor 71, the temperature sensor 72, the temperature sensor 73, and the temperature sensor 74. The temperature sensor 71 detects the outside temperature. The temperature sensor 72 detects the outlet water temperature of the main heater 40. The temperature sensor 73 detects the outlet water temperature of the battery 322. The temperature sensor 74 detects the outlet water temperature of the inverter 314. Of the motor 313 and the inverter 314, the outlet water temperature of the inverter 314, which is a component arranged downstream, is detected, and thereby, the temperature sensor 74 detects the outlet water temperature of the driving device. Signals from the temperature sensor 71, the temperature sensor 72, the temperature sensor 73, and the temperature sensor 74 are further input to the controller 5.

As shown in FIG. 11A, in the case in which the operation mode is the heating operation A mode, in the refrigeration circuit 2, the refrigerant circulates through the heat exchange circuit. In addition, in the low-water-temperature circuit 3, the cooling water circulates through the battery warming circuit 33. In addition, in the high-water-temperature circuit 4, the cooling water circulates through the radiator diverting circuit. Therefore, in the case in which the operation mode is the heating operation A mode, the refrigeration circuit 2 forms the heat exchange circuit. In addition, the low-water-temperature circuit 3 forms the battery warming circuit 33. In addition, the high-water-temperature circuit 4 forms the radiator diverting circuit.

In the case in which the operation mode is the heating operation A mode, each of the three-way valve 351 and the three-way valve 361 allows the communication between the cooling water flow path 310 and the cooling water flow path 320. In addition, the compressor 20, the water pump 321, and the water pump 43 are driven, and the water pump 311 are stopped. In addition, the solenoid valve 28 is closed, and the solenoid valve 29 is opened. In addition, the three-way valve 45 forms the radiator diverting circuit. The compressor 20 is controlled such that the temperature of the air that has passed through the evaporator 26 reaches the target temperature, for example 1°C. At the downstream of the evaporator 26, an air mix door, which adjusts the ratio of the air passing through the heater core 41, is controlled such that the air at the target blowout temperature Xm can be obtained. In the case in which dehumidificating-heating operation is performed as the heating operation, the refrigeration circuit 2 may further form the cooling-operation circuit by opening the solenoid valve 28.

As shown in FIG. 11B, in the case in which the operation mode is the heating operation B mode, in the refrigeration circuit 2, the refrigerant circulates through the heat exchange circuit. In addition, in the low-water-temperature circuit 3, the cooling water circulates through the driving-device circuit 31 and the battery circuit 32. In addition, in the high-water-temperature circuit 4, the cooling water circulates through the radiator diverting circuit. Therefore, in the case in which the operation mode is the heating operation B mode, the refrigeration circuit 2 forms the heat exchange circuit. In addition, the low-water-temperature circuit 3 forms the driving-device circuit 31 and the battery circuit 32. In addition, the high-water-temperature circuit 4 forms the radiator diverting circuit.

In the case in which the operation mode is the heating operation B mode, each of the three-way valve 351 and the three-way valve 361 shuts off the communication between the cooling water flow path 310 and the cooling water flow path 320. In addition, the compressor 20, the water pump 311, the water pump 321, and the water pump 43 are driven. In addition, the solenoid valve 28 is closed, and the solenoid valve 29 is opened. In addition, the three-way valve 45 forms the radiator diverting circuit. In order to obtain the air at the target blowout temperature Xm, the compressor 20 and the air mix door are controlled in the similar manner as in the case of the heating operation A mode. In the case in which the dehumidificating-heating operation is performed, the refrigeration circuit 2 may further form the cooling-operation circuit by opening the solenoid valve 28.

In the case in which the operation mode is the heating operation B mode, the flow amount of the cooling water circulating through the driving-device circuit 31 is set so as to be less than the flow amount of the cooling water circulating through the driving-device circuit 31 at the time of the cooling operation. In the case in which the operation mode is the heating operation B mode, specifically, the flow amount of the cooling water circulating through the driving-device circuit 31 can be set on the basis of the temperature sensor 74 within a range that allows suitable detection of the inverter temperature.

As shown in FIG. 11C, in the case in which the operation mode is the heating operation C mode, in the refrigeration circuit 2, the circulation of the refrigerant is stopped. In addition, in the low-water-temperature circuit 3, the cooling water circulates through the driving-device circuit 31. In addition, in the high-water-temperature circuit 4, the cooling water circulates through the radiator diverting circuit. Therefore, in the case in which the operation mode is the heating operation C mode, the low-water-temperature circuit 3 forms the driving-device circuit 31. In addition, the high-water-temperature circuit 4 forms the radiator diverting circuit. The refrigeration circuit 2 can form either one of the cooling-operation circuit and the heat exchange circuit.

In the case in which the operation mode is the heating operation C mode, each of the three-way valve 351 and the three-way valve 361 shuts off the communication between the cooling water flow path 310 and the cooling water flow path 320. In addition, the water pump 311 and the water pump 43 are driven, and the compressor 20 and the water pump 321 are stopped. In addition, the solenoid valve 28 and the solenoid valve 29 are closed. In addition, the three-way valve 45 forms the radiator diverting circuit. In order to obtain the air at the target blowout temperature Xm, the compressor 20 and the air mix door are controlled in the similar manner as in the case of the heating operation A mode. In the case in which the dehumidificating-heating operation is performed, the solenoid valve 28 may be opened such that the refrigeration circuit 2 forms the cooling-operation circuit, and at the same time, the compressor 20 may be driven.

In the case in which the operation mode is the heating operation C mode, the flow amount of the cooling water circulating through the driving-device circuit 31 is set so as to be less than the flow amount of the cooling water circulating through the driving-device circuit 31 at the time of the cooling operation.

As shown in FIG. 11D, in the case in which the operation mode is the cooling operation mode, the operating state of the vehicle air-conditioning device 1 becomes similar to the operating state that has been described using FIG. 3A. Therefore, explanation of the operating state in the case in which the operation mode is the cooling operation mode will be omitted. In order to obtain the air at the target blowout temperature Xm, the compressor 20 and the air mix door are controlled in the similar manner as in the case of the heating operation A mode.

As shown in FIG. 11E, in the case in which the operation mode is the heat-storing charging mode, the operating state of the vehicle air-conditioning device 1 becomes similar to the operating state that has been described using FIG. 3C. Therefore, explanation of the operating state in the case in which the operation mode is the heat-storing charging mode will be omitted. In this case, the compressor 20 is controlled by a predetermined discharge pressure. The predetermined discharge pressure is a constant pressure, and is, for example, 20 kg/cm2. In this case, the adjusting control of the ratio of the air using the air mix door is not performed.

As shown in FIG. 11F, in the case in which the operation mode is the coldness-storing charging mode, in the refrigeration circuit 2, the refrigerant circulates through the heat exchange circuit. In addition, in the low-water-temperature circuit 3, the cooling water circulates through the driving-device circuit 31 and the battery circuit 32. In addition, in the high-water-temperature circuit 4, the cooling water circulates through the radiator circuit. Therefore, in the case in which the operation mode is the coldness-storing charging mode, the refrigeration circuit 2 forms the heat exchange circuit. In addition, the low-water-temperature circuit 3 forms the driving-device circuit 31 and the battery circuit 32. In addition, the high-water-temperature circuit 4 forms the radiator circuit.

In the case in which the operation mode is the coldness-storing charging mode, each of the three-way valve 351 and the three-way valve 361 shuts off the communication between the cooling water flow path 310 and the cooling water flow path 320. In addition, the compressor 20, the water pump 311, the water pump 321, and the water pump 43 are driven. In addition, the solenoid valve 28 is closed, and the solenoid valve 29 is opened. In addition, the three-way valve 45 forms the radiator circuit. In this case, the compressor 20 is controlled such that the temperature of the low-water-temperature cooling water that has passed the refrigerant-water heat exchanger 27 reaches the target temperature by stating, for example, the minimum temperature of the above-mentioned suitable-temperature range etc. as the target temperature. With the compressor 20, it is possible to perform such control by limiting maximum output. In this case, the adjusting control of the ratio of the air using the air mix door is not performed.

Each of the vehicle air-conditioning device 1, the vehicle air-conditioning device 1A, the vehicle air-conditioning device 1B, and the vehicle air-conditioning device 1C includes the vehicle-mounted temperature adjustment device, which will be described below.

Each of the vehicle air-conditioning device 1, the vehicle air-conditioning device 1A, the vehicle air-conditioning device 1B, and the vehicle air-conditioning device 1C includes the low-water-temperature circuit 3 or the low-water-temperature circuit 3A. Both of the low-water-temperature circuit 3 and the low-water-temperature circuit 3A form the heat transfer medium circuit through which the low-water-temperature cooling water circulates as the heat transfer medium.

Therefore, each of the vehicle air-conditioning device 1, the vehicle air-conditioning device 1A, the vehicle air-conditioning device 1B, and the vehicle air-conditioning device 1C includes the low-water-temperature circuit 3 or the low-water-temperature circuit 3A, thereby including the heat transfer medium circuit.

Furthermore, each of the vehicle air-conditioning device 1, the vehicle air-conditioning device 1A, the vehicle air-conditioning device 1B, and the vehicle air-conditioning device 1C includes any one of the refrigeration circuit 2, the refrigeration circuit 2A, the refrigeration circuit 2B, and the refrigeration circuit 2C.

Each of the refrigeration circuit 2, the refrigeration circuit 2A, the refrigeration circuit 2B, and the refrigeration circuit 2C has the compressor 20 as the compression unit. In addition, each of the refrigeration circuit 2, the refrigeration circuit 2A, the refrigeration circuit 2B, and the refrigeration circuit 2C has at least any one of the condenser 21, the condenser 21A and the condenser 21B as the condensation unit, and has the SC condenser 23 as the supercooling unit. Furthermore, each of the refrigeration circuit 2, the refrigeration circuit 2A, the refrigeration circuit 2B, and the refrigeration circuit 2C has at least the expansion valve 24 of the expansion valve 24 and the expansion valve 25 as the expansion unit, and has at least the evaporator 26 of the evaporator 26 and the refrigerant-water heat exchanger 27 as the evaporation unit.

Therefore, the vehicle air-conditioning device 1, the vehicle air-conditioning device 1A, the vehicle air-conditioning device 1B, and the vehicle air-conditioning device 1C include the refrigeration circuit 2, the refrigeration circuit 2A, the refrigeration circuit 2B, and the refrigeration circuit 2C, respectively, thereby including the refrigeration circuit having the compression unit, the condensation unit, the supercooling unit, the expansion unit, and the evaporation unit.

Each of the refrigeration circuit 2, the refrigeration circuit 2A, the refrigeration circuit 2B, and the refrigeration circuit 2C has the evaporator 26. In these cases, by appropriately cooling the vehicle-cabin air-conditioned air, which is the air used for the vehicle-cabin air-conditioning, it is possible to perform a temperature adjustment of the vehicle-cabin air-conditioned air as a temperature-adjustment target. In the case of the refrigeration circuit 2C, because it is configured such that the heating operation is also performed, the refrigeration circuit 2C can perform the temperature adjustment of the vehicle-cabin air-conditioned air by warming.

Furthermore, each of the refrigeration circuit 2 and the refrigeration circuit 2C has the refrigerant-water heat exchanger 27. In these cases, it is also possible to cool and warm the battery 322. In other words, it is also possible to perform the temperature adjustment of the battery 322 as the temperature-adjustment target.

Therefore, the vehicle air-conditioning device 1, the vehicle air-conditioning device 1A, the vehicle air-conditioning device 1B, and the vehicle air-conditioning device 1C include the refrigeration circuit 2, the refrigeration circuit 2A, the refrigeration circuit 2B, and the refrigeration circuit 2C, respectively, thereby including, at the same time, a refrigeration circuit for performing the temperature adjustment of the temperature-adjustment target such as the vehicle-cabin air-conditioned air, the battery 322, and so forth.

Both of the low-water-temperature circuit 3 and the low-water-temperature circuit 3A have the sub-radiator 312 as the radiation unit. Therefore, in each of the vehicle air-conditioning device 1, the vehicle air-conditioning device 1A, the vehicle air-conditioning device 1B, and the vehicle air-conditioning device 1C, the low-water-temperature circuit 3 or the low-water-temperature circuit 3A, which is included as the heat transfer medium circuit, has the radiation unit.

Thus, each of the vehicle air-conditioning device 1, the vehicle air-conditioning device 1A, the vehicle air-conditioning device 1B, and the vehicle air-conditioning device 1C includes the heat transfer medium circuit and the refrigeration circuit and includes the vehicle-mounted temperature adjustment device in which the heat transfer medium circuit has the radiation unit.

As described above, according to the vehicle-mounted temperature adjustment device that has been exemplified as a component of the vehicle air-conditioning device 1, the vehicle air-conditioning device 1A, the vehicle air-conditioning device 1B, and the vehicle air-conditioning device 1C, it is possible to promote cooling of the refrigerant by the supercooling unit that has been exemplified by the SC condenser 23. Therefore, it is possible to achieve the improvement in the efficiency of the refrigeration circuit that has been exemplified by the refrigeration circuit 2, the refrigeration circuit 2A, the refrigeration circuit 2B, and the refrigeration circuit 2C.

With such a vehicle-mounted temperature adjustment device, the condensation unit that has been exemplified by the condenser 21, the condenser 21A, and the condenser 21B releases the heat of the refrigerant to the fluid that is different from the heat transfer medium that has been exemplified by the low-water-temperature cooling water, in other words the fluid that has been exemplified by the high-water-temperature cooling water and the air.

According to the vehicle-mounted temperature adjustment device having such a configuration, because the condensation unit and the supercooling unit, which have been exemplified as above, respectively release the heat of the refrigerant to the different fluids, it is possible to promote cooling of the refrigerant compared with the case in which the heat of the refrigerant is released to the same fluid.

In other words, the vehicle air-conditioning device 1 can be described as having a configuration shown below. That is to say, the vehicle air-conditioning device 1 is the vehicle air-conditioning device including the vehicle-mounted temperature adjustment device and has a configuration in which the temperature-adjustment target is the vehicle-cabin air-conditioned air and the evaporation unit includes the evaporator 26.

According to the vehicle air-conditioning device 1 thus configured, because supercooling is achieved by, as described above, releasing the heat by the SC condenser 23 from the refrigeration circuit 2 to the driving-device circuit 31 at the time of the cooling operation, it is possible to achieve energy saving by the improvement in the efficiency of the refrigeration circuit 2 at the time of the cooling operation. The same applies to the vehicle air-conditioning device 1A, the vehicle air-conditioning device 1B, and the vehicle air-conditioning device 1C.

When the supercooling is promoted in the refrigeration cycle, the efficiency at the time of the cooling operation is improved. However, by cooling the refrigerant by the supercooling, there is a risk that the heating operation performance is deteriorated when the refrigeration cycle is used for the heating operation. In contrast, in this embodiment, this problem is solved by a configuration described below.

In other words, the vehicle air-conditioning device 1 has a configuration in which the evaporation unit further includes the refrigerant-water heat exchanger 27, and at the time of the heating operation, the heat is indirectly released to the vehicle-cabin air-conditioned air by the condensation unit that has been exemplified by the condenser 21. In addition, at the time of the heating operation, the vehicle air-conditioning device 1 has a configuration in which the flow of the low-water-temperature cooling water to the sub-radiator 312 is stopped in the low-water-temperature circuit 3, and the low-water-temperature cooling water is circulated between the SC condenser 23 and the refrigerant-water heat exchanger 27. With this configuration, the heat of the refrigerant released at the SC condenser 23 is absorbed at the refrigerant-water heat exchanger 27 via the low-water-temperature cooling water. In other words, an amount of heat corresponding to the supercooling, that is to say, an amount of heat corresponding to the heat released at the SC condenser 23 is returned to the refrigeration circuit 2 again via the refrigerant-water heat exchanger 27, thereby suppressing deterioration in the heating operation performance. The condenser 21 is one example of the condensation unit that indirectly releases the heat to the vehicle-cabin air-conditioned air via the heater core 41 of the high-water-temperature circuit 4.

In addition, according to the vehicle air-conditioning device 1 thus configured, by releasing the heat from the battery circuit 32 to the refrigeration circuit 2 by the refrigerant-water heat exchanger 27 at the time of the heating operation as described above, it is possible to achieve energy saving for the heating operation. Therefore, it is possible to achieve energy saving at the time of both the cooling operation and the heating operation. The same applies to the vehicle air-conditioning device 1C. In this case, the condensation unit that directly releases the heat to the vehicle-cabin air-conditioned air is exemplified by the condenser 21B.

The vehicle air-conditioning device 1 can be described as having a further configuration shown below. In other words, the vehicle air-conditioning device 1 can be described as having a configuration in which the low-water-temperature circuit 3 further performs the heat exchange between the battery 322 and the low-water-temperature cooling water. The vehicle air-conditioning device 1 can then be described as having a configuration that forms, at the time of the heating operation, the battery warming circuit 33 in which the low-water-temperature cooling water circulates through the SC condenser 23, the battery 322, and the refrigerant-water heat exchanger 27.

According to the vehicle air-conditioning device 1 thus configured, it is possible to warm the battery 322. The same applies to the vehicle air-conditioning device 1C.

The vehicle air-conditioning device 1 can be described as having a further configuration shown below. In other words, the vehicle air-conditioning device 1 can be described as having a configuration in which the battery warming circuit 33 is further provided so as to perform the heat exchange between the motor 313 and the inverter 314; and the low-water-temperature cooling water. In addition, the vehicle air-conditioning device 1 can be described as having a configuration that in which the low-water-temperature circuit 3 forms the battery warming circuit 33 when the battery temperature and the inverter temperature are higher than the predetermined temperature β.

According to the vehicle air-conditioning device 1 thus configured, it is possible to use the heat of the motor 313, the inverter, and the battery for the heating operation. Specifically, the vehicle air-conditioning device 1 thus configured can have a configuration in which the low-water-temperature circuit 3 forms the battery warming circuit 33 when the battery temperature is higher than the predetermined temperature β and when the inverter temperature is higher than the battery temperature. The same applies to the vehicle air-conditioning device 1C.

In addition, the vehicle air-conditioning device 1 can be described as having a configuration shown below. In other words, the vehicle air-conditioning device 1 can be described as having a configuration in which the low-water-temperature circuit 3 is provided so as to further perform the heat exchange between the motor 313, the inverter 314, and the battery 322; and the low-water-temperature cooling water. In addition, the vehicle air-conditioning device 1 can be described as having a configuration in which the evaporation unit includes the refrigerant-water heat exchanger 27. The vehicle air-conditioning device 1 can then be described as having a configuration in which, at the time of the heating operation, the condensation unit that has been exemplified by the condenser 21 indirectly releases the heat to the vehicle-cabin air-conditioned air. In addition, at the time of the heating operation, the vehicle air-conditioning device 1 can then be described as having a configuration in which, when the battery temperature is higher than the predetermined temperature β and when the inverter temperature is lower than the battery temperature, the low-water-temperature circuit 3 forms the driving-device circuit 31 and forms the battery circuit 32.

According to the vehicle air-conditioning device 1 thus configured, it is possible to use the heat of the battery 322, which is available for heat utilization, for the heating operation and to release the heat of the motor 313 and the inverter 314, which is not available for heat utilization. The same applies to the vehicle air-conditioning device 1C. In this case, the condensation unit that directly releases the heat to the vehicle-cabin air-conditioned air is exemplified by the condenser 21B.

The vehicle air-conditioning device 1 can be described as having a further configuration shown below. In other words, the vehicle air-conditioning device 1 can be described as having a configuration in which the low-water-temperature circuit 3 further forms the driving-device circuit 31 at the time of the cooling operation. The vehicle air-conditioning device 1 can then be described as having a configuration in which, at the time of the heating operation, in a predetermined case, the flow amount of the low-water-temperature cooling water circulating through the driving- devices circuit 31 is lower than the flow amount of the low-water-temperature cooling water circulating through the driving-device circuit 31 at the time of the cooling operation. The predetermined case is a case in which the battery temperature is higher than the predetermined temperature β, and the inverter temperature is lower than the battery temperature.

According to the vehicle air-conditioning device 1 thus configured, by reducing the amount of heat released from the motor 313 and the inverter 314, it is possible to make the heat utilization of the motor 313 and the inverter 314 easy to be performed again. The same applies to the vehicle air-conditioning device 1C.

The vehicle air-conditioning device 1B, in other words, a vehicle air-conditioning device including the vehicle-mounted temperature adjustment device, can be described as having a configuration shown below. In other words, the vehicle air-conditioning device 1B can be described as having a configuration in which the temperature-adjustment target is the vehicle-cabin air-conditioned air, and the refrigeration circuit 2B further has the condenser 21A and the bypass flow path 206, which is one example of a condensation-unit bypass flow path. In addition, the vehicle air-conditioning device 1 B can be described as having a configuration in which the refrigeration circuit 2B is configured such that, at the time of the cooling operation, the refrigerant circulates through the compressor 20, the bypass flow path 206, the condenser 21A, the SC condenser 23, and the evaporator 26.

According to the vehicle air-conditioning device 1B thus configured, because it is possible to release the heat by the SC condenser 23 from the refrigeration circuit 2B to the driving-device circuit 31 at the time of the cooling operation, it is possible to achieve energy saving by the improvement in the efficiency of the refrigeration circuit 2 at the time of the cooling operation as described above.

The vehicle air-conditioning device 1B can be described as having a further configuration shown below. In other words, the vehicle air-conditioning device 1B can be described as having a configuration in which the refrigeration circuit 2B further has the expansion valve 201, which is one example of a heating-operation-time expansion unit, and the bypass flow path 209, which is one example of an evaporation-unit bypass flow path. In addition, the vehicle air-conditioning device 1B can be described as having a configuration in which the refrigeration circuit 2B is configured such that, at the time of the heating operation, the refrigerant circulates through the compressor 20, the condenser 21, the expansion valve 201, the condenser 21A, the SC condenser 23, and the bypass flow path 209.

According to the vehicle air-conditioning device 1B thus configured, at the time of the heating operation, the refrigerant passes through the SC condenser 23 after being depressurized at the expansion valve 201. Therefore, the SC condenser 23 functions as the evaporating unit.

The vehicle air-conditioning device 1B can be described as having a further configuration shown below. In other words, the vehicle air-conditioning device 1B can be described as having a configuration in which the low-water-temperature circuit 3A is further provided so as to perform the heat exchange between the low-water-temperature cooling water and at least one of the motor 313 and the inverter 314. In addition, the vehicle air-conditioning device 1B can be described as having a configuration in which the SC condenser 23 absorbs the heat from the low-water-temperature cooling water at the time of the heating operation.

According to the vehicle air-conditioning device 1B thus configured, it is possible to recover the waste heat of the motor 313 and the inverter 314 at the SC condenser 23 as described above and to use it for the heating operation.

In the vehicle air-conditioning device 1B having such a configuration, the low-water-temperature circuit 3A may be provided so as to perform the heat exchange between the low-water-temperature cooling water and at least one of the motor 313, the inverter 314, and the battery 322 (here, the battery 322 is further included in addition to the motor 313 and the inverter 314). In this case, it is possible to further recover the heat from the battery 322 and to use it for the heating operation.

When the temperature adjustment of the battery 322 is focused, the vehicle air-conditioning device 1 and the vehicle air-conditioning device it can be described as, in other words, the battery-temperature adjustment device as described below. That is to say, the vehicle air-conditioning device 1 and the vehicle air-conditioning device 1C are the battery-temperature adjustment devices including the vehicle-mounted temperature adjustment device and can be described as having a configuration in which the temperature-adjustment target is the battery 322. The vehicle air-conditioning device 1 and the vehicle air-conditioning device 1C can then be described as having a configuration in which the low-water-temperature circuit 3 is further provided so as to perform the heat exchange between the battery 322 and the low-water-temperature cooling water. In addition, the vehicle air-conditioning device 1 and the vehicle air-conditioning device 1C can then be described as having a configuration in which the evaporation unit includes the refrigerant-water heat exchanger 27, and the condensation unit that has been exemplified by the condenser 21 and the condenser 21A releases the heat directly or indirectly to the air that is the outside air. The vehicle air-conditioning device 1 and the vehicle air-conditioning device 1C can then be described as having a configuration in which, when the battery 322 is cooled, the low-water-temperature circuit 3 forms, as has been exemplified by the driving-device circuit 31, a circuit in which the low-water-temperature cooling water circulates through the SC condenser 23 and the sub-radiator 312, and at the same time, the low-water-temperature circuit 3 forms the battery circuit 32. The condenser 21 is one example of the condensation unit that indirectly releases the heat via the radiator 44, and the condenser 21A is one example of the condensation unit that directly releases the heat to the air.

According to the battery-temperature adjustment device thus configured, because the heat can be released by the SC condenser 23 from the refrigeration circuit 2 to the driving-device circuit 31 at the time of cooling the battery 322, it is possible to achieve energy saving by the improvement in the efficiency of the refrigeration circuit 2 at the time of cooling.

The battery-temperature adjustment device can be described as having a further configuration shown below. In other words, the battery-temperature adjustment device can be described as having a configuration in which the low-water-temperature circuit 3 forms, as has been exemplified by the battery warming circuit 33, a circuit in which the low-water-temperature cooling water circulates through the SC condenser 23 and the battery 322 when the battery 322 is warmed.

According to the battery-temperature adjustment device thus configured, because the battery 322 can be warmed with the heat released at the SC condenser 23, no heater for warming the battery 322 needs to be provided. Alternatively, it is possible to reduce the size of the heater.

Specifically, the SC condenser 23 in the low-water-temperature circuit 3 is arranged as described below.

In this case, in order to promote the release of the heat from the refrigeration circuit 2 to the low-water-temperature circuit 3 performed by the SC condenser 23 at the time of the cooling operation, as the arrangement condition at the time of the cooling operation, the SC condenser 23 needs to be arranged as follows. In other words, the low-water-temperature circuit 3 needs to be arranged in a circulation circuit of the cooling water that is formed at the time of the cooling operation, in other words, the circulation circuit including the sub-radiator 312. As shown in FIGs. 3A and 11D, the vehicle air-conditioning device 1 then forms the driving-device circuit 31at the time of the cooling operation as such a circulation circuit. Therefore, in order to satisfy the arrangement condition at the time of the cooling operation, the SC condenser 23 needs to be arranged in the driving-device circuit 31.

In addition, in order to recover, at the refrigerant-water heat exchanger 27, the heat that has been transferred by the SC condenser 23 from the refrigeration circuit 2 to the low-water-temperature circuit 3 at the time of the heating operation, as the arrangement condition at the time of the heating operation, the SC condenser 23 needs to be arranged as follows. In other words, the SC condenser 23 needs to be arranged in the circulation circuit of the cooling water that is formed by the low-water-temperature circuit 3 at the time of the heating operation, in other words, in the circulation circuit including the refrigerant-water heat exchanger 27. As shown in FIGs. 3B, 8, 11A, and 11B, the vehicle air-conditioning device 1 then forms the battery circuit 32 and the battery warming circuit 33 at the time of the heating operation as such a circulation circuit. Therefore, in order to satisfy the arrangement condition at the time of the heating operation, the SC condenser 23 needs to be arranged in the battery circuit 32 or the battery warming circuit 33.

In order to satisfy the arrangement condition at the time of the cooling operation, as shown in FIG. 12 for example, the SC condenser 23 may also be arranged between the water pump 311 and the sub-radiator 312. In addition, in order to satisfy the arrangement condition at the time of the heating operation, as shown in FIG. 13 for example, the SC condenser 23 may also be arranged between the water pump 321 and the three-way valve 361.

However, in these cases, the arrangement conditions at the time of the cooling operation and the heating operation cannot be satisfied. In addition, the driving-device circuit 31 formed at the time of the cooling operation and the battery circuit 32 formed at the time of the heating operation do not share the flow path. Therefore, in the vehicle air-conditioning device 1, the SC condenser 23 is arranged at the flow path shared by the driving-device circuit 31 and the battery warming circuit 33. By doing so, the arrangement conditions at the time of the cooling operation and the heating operation can be satisfied. Therefore, it is preferred to arrange the SC condenser 23 in this manner.

Although the embodiments of the present invention have been described in the above, the above-mentioned embodiments merely illustrate a part of application examples of the present invention, and the technical scope of the present invention is not intended to be limited to the specific configurations in the above-mentioned embodiments.

In the above-mentioned embodiment, a description has been given of the case in which the vehicle air-conditioning device 1 includes the motor 313 and the inverter 314, the motor 313 and the inverter 314; however, the vehicle air-conditioning device 1 only needs to include at least one of the motor 313 and the inverter 314.

In the above-mentioned embodiment, a description has been given of the vehicle air-conditioning device 1 that is mounted on the electric vehicle as one example; however, the vehicle air-conditioning device 1 may be mounted on a fuel-cell vehicle and the hybrid vehicle.

This application claims priority based on Japanese patent Application No. 2014-49129 filed with the Japanese Patent Office on March 12th, 2014, and Japanese patent Application No. 2014-195462 filed with the Japanese Patent Office on September 25th, 2014, the entire contents of which are incorporated into this specification by reference.

## Claims

1. A vehicle-mounted temperature adjustment device comprising
a heat transfer medium circuit being configured to allow circulation of heat transfer medium and
a refrigeration circuit having: a compression unit being configured to compress refrigerant; a condensation unit being configured to condense the refrigerant having been compressed by the compression unit; a supercooling unit being configured to cool the refrigerant by performing heat exchange between the refrigerant having been condensed by the condensation unit and the heat transfer medium; an expansion unit being configured to expand the refrigerant having been cooled by the supercooling unit; and an evaporation unit being configured to evaporate the refrigerant having been expanded by the expansion unit; and being configured to perform temperature adjustment of a temperature-adjustment target,
wherein the heat transfer medium circuit has a radiation unit being configured to release heat of the heat transfer medium having been subjected to the heat exchange with the refrigerant at the supercooling unit.

2. The vehicle-mounted temperature adjustment device according to claim 1, wherein
the condensation unit is configured to release heat of the refrigerant to fluid being different from the heat transfer medium.

3. A vehicle air-conditioning device including the vehicle-mounted temperature adjustment device according to claim 1 or 2, wherein
the temperature-adjustment target is air used for vehicle-cabin air-conditioning, and
the evaporation unit includes an air-conditioning evaporation unit being configured to absorb heat from the air used for the vehicle-cabin air-conditioning.

4. The vehicle air-conditioning device according to claim 3, wherein the evaporation unit further includes a heat-absorbing evaporation unit being configured to absorb heat from the heat transfer medium and
at a time of a heating operation,
the condensation unit is configured to directly or indirectly release heat to the air used for the vehicle-cabin air-conditioning and
the heat transfer medium circuit is configured to stop flow of the heat transfer medium to the radiation unit and to circulate the heat transfer medium through the supercooling unit and the heat-absorbing evaporation unit.

5. The vehicle air-conditioning device according to claim 4, wherein the heat transfer medium circuit
is provided so as to further perform heat exchange between a battery and the heat transfer medium and
forms a battery warming circuit being configured to allow circulation of the heat transfer medium through the supercooling unit, the battery, and the heat-absorbing evaporation unit at the time of the heating operation.

6. The vehicle air-conditioning device according to claim 5, wherein
the battery warming circuit is provided so as to further perform the heat exchange between the heat transfer medium and a driving device including at least one of a motor and an inverter, and
the heat transfer medium circuit forms the battery warming circuit when temperature of the battery and temperature of the driving device are higher than a predetermined temperature.

7. The vehicle air-conditioning device according to claim 3, wherein:
the heat transfer medium circuit is provided so as to further perform heat exchange between the heat transfer medium, and a battery and a driving device including at least one of a motor and an inverter;
the evaporation unit further includes a heat-absorbing evaporation unit being configured to absorb heat from the heat transfer medium; and
at a time of a heating operation,
the condensation unit is configured to directly or indirectly release heat to the air used for the vehicle-cabin air-conditioning and
the heat transfer medium circuit forms, when temperature of the battery is higher than a predetermined temperature and when temperature of the driving device is lower than the temperature of the battery, a driving-device circuit being configured to allow circulation of the heat transfer medium through the supercooling unit, the driving device, and the radiation unit and forms a battery circuit being configured to allow circulation of the heat transfer medium through the battery and the heat-absorbing evaporation unit.

8. The vehicle air-conditioning device according to claim 7, wherein
the heat transfer medium circuit further forms the driving-device circuit at a time of a cooling operation and
flow amount of the heat transfer medium circulating through the driving-device circuit when the temperature of the battery is higher than a predetermined temperature and when the temperature of the driving device is lower than the temperature of the battery at the time of the heating operation is lower than flow amount of the heat transfer medium circulating through the driving-device circuit at the time of the cooling operation.

9. The vehicle air-conditioning device including the vehicle-mounted temperature adjustment device according to claim 1 or 2, wherein
the temperature-adjustment target is air used for vehicle-cabin air-conditioning and
the refrigeration circuit:
further has an outside heat exchange unit being arranged between the supercooling unit and the condensation unit and configured to perform heat exchange between the refrigerant and air outside a vehicle cabin, and a condensation-unit bypass flow path being connected to the outside heat exchange unit so as to be diverted from the condensation unit; and
is configured such that, at a time of a cooling operation, the refrigerant circulates through the compression unit, the condensation-unit bypass flow path, the outside heat exchange unit, the supercooling unit, and the evaporation unit.

10. The vehicle air-conditioning device according to claim 9, wherein the refrigeration circuit,
further has a heating-operation-time expansion unit being provided between the condensation unit and the outside heat exchange unit and an evaporation-unit bypass flow path being diverted from the evaporation unit, and
is configured such that, at the time of the heating operation, the refrigerant circulates through the compression unit, the condensation unit, the heating-operation-time expansion unit, the outside heat exchange unit, the supercooling unit, and the evaporation-unit bypass flow path.

11. The vehicle air-conditioning device according to claim 10, wherein
the heat transfer medium circuit is provided so as to further perform the heat exchange between the heat transfer medium and at least one of a motor and an inverter and
the supercooling unit is configured to absorb heat from the heat transfer medium at the time of the heating operation.

12. The vehicle air-conditioning device according to claim 11, wherein
the heat transfer medium circuit is provided so as to perform the heat exchange between the heat transfer medium and at least one of the motor, the inverter, and a battery, in which the battery being further included in addition to the motor and the inverter.

13. The battery-temperature adjustment device including the vehicle-mounted temperature adjustment device according to claim 1 or 2, wherein:
the temperature-adjustment target is a battery;
the heat transfer medium circuit is provided so as to further perform heat exchange between the battery and the heat transfer medium;
the evaporation unit includes a heat-absorbing evaporation unit being configured to absorb heat from the heat transfer medium;
the condensation unit is configured to release heat to air directly or indirectly; and
the heat transfer medium circuit forms a circuit being configured to allow circulation of the heat transfer medium through the supercooling unit and the radiation unit when the battery is cooled and forms a battery circuit being configured to allow circulation of the heat transfer medium through the battery and the heat-absorbing evaporation unit.

14. The battery-temperature adjustment device according to claim 13, wherein
the heat transfer medium circuit forms a circuit being configured to allow circulation of the heat transfer medium through the supercooling unit and the battery when the battery is warmed.
